# EUROPÄISCHE PATENTSCHRIFT

(11) **EP 3 081 707 B1**
(45) Veröffentlichungstag und Bekanntmachung des Hinweises auf die Patenterteilung: **03.06.2020**
(21) Anmeldenummer: 15001143.5
(22) Anmeldetag: 18.04.2015
(51) Int. Cl.: E04B 1/41, F16B 37/04

(54) **ANKERSCHIENE ZUR VERANKERUNG IM BETON UND BEFESTIGUNGSSYSTEM MIT EINER ANKERSCHIENE**
ANCHOR RAIL FOR ANCHORING IN CONCRETE AND FIXING SYSTEM COMPRISING AN ANCHOR RAIL
RAIL D'ANCRAGE DANS LE BÉTON ET SYSTÈME DE FIXATION DOTÉ D'UN RAIL D'ANCRAGE

(43) Veröffentlichungstag der Anmeldung: 19.10.2016
(73) Patentinhaber: HALFEN GmbH, 40764 Langenfeld (DE)
(72) Erfinder: Heidolf, Thorsten, D-99425 Weimar (DE); Füllsack-Köditz, Raimo Matthias, D-99423 Weimar (DE); Albartus, Dirk, D-44795 Bochum (DE); Knobloch, Torsten, D-59423 Unna (DE)
(74) Vertreter: Reinhardt, Annette

(56) Entgegenhaltungen:
- WO-A1-2011/076606
- WO-A1-2013/013375
- DE-A1- 19 725 882
- DE-A1-102008 054 807
- US-A1- 2010 101 175

## Beschreibung

Die vorliegende Erfindung betrifft eine Ankerschiene der im Oberbegriff des Anspruchs 1 angegebenen Gattung und ein Befestigungssystem mit einer Ankerschiene.

Eine Ankerschiene mit einem zugehörigen Befestigungselement ist aus der DE 197 18 230 B4 bekannt. Zur Verwendung der Ankerschiene und des Befestigungselements als Befestigungssystem werden nach dem Einbetonieren der Ankerschiene Schienenmuttern, Hintergreifteile, Kopf- oder Hammerkopfschrauben in die Ankerschiene eingebracht, um damit Gegenstände an der Ankerschiene befestigen zu können. Die Position der Kopfschraube wird mit Hilfe des Befestigungselements gesichert. Hierzu wird der Gewindeschaft, der aus der Ankerschiene herausragt, durch eine Durchgangsöffnung des Befestigungselements und durch ein Loch im zu befestigenden Gegenstand gesteckt. Beim Aufschrauben einer Befestigungsmutter auf den aus dem Gegenstand herausragenden Gewindeschaft der Kopfschraube wird das Befestigungselement über den Gegenstand gegen die freien Schenkel der Ankerschiene gedrückt. Das Befestigungselement weist Zähne auf, die beim Befestigen des Gegenstands mit Hilfe der Befestigungsmutter an den freien Schenkeln der Ankerschiene eingreifen. Die freien Schenkel der Ankerschiene sind derart ausgebildet, dass die Zähne des Befestigungselements dabei in die freien Schenkel der Ankerschiene deformierend eindringen, wobei ein Kraft- und Formschluss entsteht.

Bei einem Befestigungssystem nach der DE 197 18 230 B4 sind an das Material der Ankerschiene gegensätzliche Anforderungen gestellt: Zum einen muss das Material der Schenkel der Ankerschiene genügend weich sein, damit die Zähne des Befestigungselements beim Befestigen des Gegenstands mit der Befestigungsmutter deformierend in die Schenkel eindringen können; zum anderen müssen die Schenkel aus einem Material gefertigt sein, das genügend stabil und hart ist, damit die Schenkel das Gewicht des befestigten Gegenstands tragen können und nicht unter der Zugbelastung der auf den Kopf der Kopfschraube übertragenen Gewichtskraft des befestigten Gegenstands aufbiegen. Diese gegensätzlichen Anforderungen an das Material der Schenkel der Ankerschiene limitieren die Materialauswahl stark. Insbesondere die Bedingung, dass das Material der Schenkel nicht zu hart sein darf, begrenzt die Stabilität der Ankerschiene.

Darüber hinaus wird die Stabilität der beiden Schenkel durch die Deformierung der Schenkel während des Befestigungsvorgangs verringert. Ein Nachjustieren der Position des zu befestigenden Gegenstands durch Verschieben der Kopfschraube und des Befestigungselements in Längsrichtung der Ankerschiene ist verbunden mit einer weiteren Deformierung der freien Schenkel der Ankerschiene, da sich die Zähne des Befestigungselements an anderer Stelle als zuvor in die freien Schenkel graben. Ein solcher Nachjustierungsvorgang verringert die Stabilität der Ankerschiene insgesamt und sollte bei einem Befestigungssystem nach der DE 197 18 230 B4 unter allen Umständen vermieden werden.

Aus der DE 197 25 882 A1 geht eine Ankerschiene gemäß dem Oberbegriff des Anspruchs 1 hervor, bei der die Längsseiten über den Boden der C-förmigen Ankerschiene hinaus verlängert sind. Die freien Schenkel besitzen an ihrer Außenseite in Längsrichtung verlaufende Zähne.

Aus der WO 2011/076606 A1 geht eine Verankerungsvorrichtung mit einer Schiene hervor, die am Boden und den Seitenwänden Aussparungen aufweist. Die freien Schenkel der Schiene sind nach außen voneinander weg gebogen und zickzackförmig gebogen, und die dadurch gebildeten Zahnvertiefungen sind seitlich offen.

Aus der US 2010/0101175 A1 geht eine Ankerschiene mit C-förmigem Querschnitt hervor, bei der die freien Schenkel an ihren aufeinander zugewandten Stirnseiten mit einer Verzahnung versehen sind. Die Stirnseiten liegen bündig in der Außenoberfläche des Betonteils.

Aus der WO 2013/013375 A1 geht eine Ankerschiene mit C-förmigem Querschnitt hervor, deren freie Schenkel an der dem Anker zugewandten Innenseite eine Verzahnung tragen. Die Außenseiten der freien Schenkel sind eben ausgebildet.

Aus der DE 10 2008 054 807 A1 geht eine näherungsweise C-förmige Ankerschiene hervor, bei der die freien Schenkel an der Außenseite und der Innenseite eben ausgebildet sind.

Eine Aufgabe der Erfindung ist es, eine gattungsgemäße Ankerschiene bereitzustellen, die einfach aufgebaut ist und eine große Stabilität aufweist.

Eine weitere Aufgabe der Erfindung ist es, ein Befestigungssystem mit einer Ankerschiene bereitzustellen, das auch bei Belastung durch einen mit Hilfe des Befestigungssystems an der Ankerschiene befestigten Gegenstand eine große Stabilität aufweist.

Die Aufgabe wird bezüglich der Ankerschiene durch eine Ankerschiene mit den Merkmalen des Anspruchs 1 gelöst.

Die weitere Aufgabe bezüglich des Befestigungssystems wird durch ein Befestigungssystem mit den Merkmalen des Anspruchs 12 gelöst.

Bezüglich der Ankerschiene ist vorgesehen, dass die freien Schenkel an ihrer dem Anker abgewandten Seite bezogen auf die Längserstreckung der Ankerschiene eine zumindest partielle Verzahnung besitzen. Die dem Anker abgewandten Seiten der freien Schenkel der Ankerschiene sind Teil der vorderen Außenseite der Ankerschiene. Mit vorderer Außenseite wird der Teil der Außenseite der Ankerschiene bezeichnet, der nach der Befestigung der Ankerschiene im Beton nicht direkt mit dem Beton in Berührung steht.

Für ein Befestigungssystem zur Befestigung eines Gegenstands ist vorgesehen, dass die Ankerschiene als Teil des Befestigungssystems genutzt wird. Der Gegenstand weist einen befestigten Zustand auf. Im befestigten Zustand ist der Gegenstand fest mit der Ankerschiene verbunden. Zur Befestigung des Gegenstands ist ein Rastungselement vorgesehen, das eine Verzahnung aufweist. Vorteilhaft ist das Rastungselement getrennt von dem zu befestigenden Gegenstand ausgebildet. Es kann aber auch vorgesehen sein, dass der zu befestigende Gegenstand das Rastungselement besitzt und das Rastungselement einteilig mit dem zu befestigenden Gegenstand ausgebildet ist. Das Rastungselement ist im befestigten Zustand des Gegenstands an den freien Schenkeln der Ankerschiene angeordnet. Die Verzahnung des Rastungselements zeigt in Richtung der freien Schenkel der Ankerschiene. Die Verzahnung des Rastungselements greift im befestigten Zustand des Gegenstands in die Verzahnung der Schenkel der Ankerschiene ein.

In vorteilhafter Weiterbildung des erfindungsgemäßen Befestigungssystems ist vorgesehen, dass das Befestigungssystem eine Kopfschraube umfasst, und dass im befestigten Zustand des Gegenstands ein Kopf der Kopfschraube in den zwischen den freien Schenkeln in Längsrichtung der Ankerschiene ausgebildeten Schlitz eingehängt ist und ein Gewindeschaft der Kopfschraube in Richtung weg vom Anker der Ankerschiene aus der Ankerschiene herausragt. Das Rastungselement weist vorteilhaft eine Durchgangsöffnung auf, und der Gewindeschaft der Kopfschraube ist zur Sicherung der Kopfschraube innerhalb der Ankerschiene durch die Durchgangsöffnung des Rastungselements gesteckt.

Durch die Verwendung des verzahnten Rastungselements kann die Position des Rastungselements gegenüber der Position der Ankerschiene verändert werden, indem das befestigte Rastungselement gelöst wird und das Rastungselement um die Breite eines Zahns oder mehrerer Zähne der beiden Verzahnungen in Längsrichtung der Ankerschiene verschoben wird. Eine erneute Befestigung des zu befestigenden Gegenstandes ist ohne Verringerung der bisherigen Stabilität der Ankerschiene möglich. Der zur Befestigung des zu befestigenden Gegenstands nötige Anpressdruck führt nicht zu einer Deformation der Ankerschiene und auch nicht zu einer Deformation der Schenkel der Ankerschiene. Darüber hinaus kann für Ankerschiene und Rastungselement dasselbe Material verwendet werden. Der Härtegrad des Materials, aus dem die Ankerschiene gefertigt ist, ist nicht durch den Härtegrad des Materials, aus dem das Rastungselement gefertigt ist, begrenzt.

Da zur Befestigung eines Gegenstands mit Hilfe des erfindungsgemäßen Befestigungssystems keine Deformierung der Schenkel der Schiene nötig ist, ist der benötigte Anpressdruck sehr viel geringer. Aus diesem Grund muss beim Befestigen des Gegenstands weniger Kraft aufgewendet werden, weshalb die Befestigung eines Gegenstands mit Hilfe des erfindungsgemäßen Befestigungssystems einfacher ist.

Ein weiterer Vorteil des erfindungsgemäßen Befestigungssystems besteht darin, dass die verwendeten Kopfschrauben.auch in Ankerschienen, bei denen die dem Anker abgewandten Seiten der freien Schenkel unverzahnt sind, verwendet werden können. Werden auf einer Baustelle aus Kostengründen sowohl Ankerschienen mit Verzahnung der vorderen Außenseite der freien Schenkel als auch Ankerschienen ohne Verzahnung verbaut, muss der Monteur zur Befestigung von Gegenständen in den beiden verschiedenen Ankerschienen keine verschiedenen Schraubentypen mit sich führen. Auch die Lagerhaltung eines Ankerschienenherstellers, der sowohl verzahnte als auch unverzahnte Ankerschienen herstellt, ist im Hinblick auf die in den Ankerschienen verwendeten Schrauben einfach. Solche Schrauben müssen für unterschiedlich große Ankerschienen mit verschiedenen Kopfgrößen, verschiedenen Gewindedurchmessern und verschiedenen Längen vorgehalten werden. Müssten für unterschiedliche Typen von Ankerschienen - verzahnt und unverzahnt - verschiedene Typen von Kopfschrauben vorgehalten werden, wäre der Lageraufwand um ein Vielfaches höher als wenn für beide Typen von Ankerschienen dieselbe Art von Schraube verwendet werden kann.

In vorteilhafter Weiterbildung der erfindungsgemäßen Ankerschiene besitzen die Schenkel an ihrer dem Anker abgewandten Seite bezogen auf die Längserstreckung der Ankerschiene eine durchgehende Verzahnung. Dadurch kann das Rastungselement an jeder beliebigen Stelle entlang der Längsrichtung der Ankerschiene so positioniert werden, dass ihre Verzahnung in die Verzahnung der Ankerschiene eingreift. Vorteilhaft erstreckt sich die Verzahnung des Rastungselements ebenso über die gesamte Länge des Rastungselements. In befestigtem Zustand des Gegenstands erstrecken sich die Länge des Rastungselements und die Länge der Ankerschiene in dieselbe Richtung. Wenn sich die Verzahnung der Ankerschiene über die gesamte Länge der Ankerschiene erstreckt und sich auch die Verzahnung des Rastungselements über die gesamte Länge des Rastungselements erstreckt, ist die Kontaktfläche zwischen Rastungselement und den Schenkeln der Ankerschiene vergleichsweise groß. Daraus ergibt sich in befestigtem Zustand des Gegenstands ein besserer Halt des befestigten Gegenstands.

In vorteilhafter Weiterbildung der erfindungsgemäßen Ankerschiene ist die Verzahnung der Schenkel quer zur Längsrichtung der Ankerschiene orientiert. Die Verzahnung verläuft dabei vorteilhaft in einem Winkel von 60° bis 120° zur Längsrichtung der Ankerschiene. Als besonders vorteilhaft wird ein Winkel von etwa 90° angesehen. Mit dem Verlauf der Verzahnung ist hierbei die Längsrichtung einzelner Zähne der Verzahnung gemeint. Wenn die Längsrichtung der Ankerschiene bei ihrem Einbau in Vertikalrichtung orientiert ist und die Verzahnung der Schenkel in einem Winkel von 90° zur Längsrichtung der Ankerschiene orientiert ist, erstrecken sich die einzelnen Zähne in Horizontalrichtung. Dadurch bieten sie zur Aufnahme der in Vertikalrichtung wirkenden Gewichtskraft des befestigten Gegenstands eine möglichst breite Fläche an. Vorteilhaft ist die Verzahnung auf dem Rastungselement des Befestigungssystems entsprechend orientiert. Die Gewichtskraft des befestigten Gegenstands wird über das Rastungselement und die Verzahnung des Rastungselements auf die Verzahnung der Schenkel der Ankerschiene übertragen und über die im Beton eingegossenen Anker der Ankerschiene in den Beton eingeleitet. Durch die Orientierung der Verzahnung der Schenkel quer zur Längsrichtung der Ankerschiene ist eine sehr gute Kraftübertragung der Gewichtskraft des befestigten Gegenstands auf den im Beton befestigten Anker der Ankerschiene gewährleistet.

In einer vorteilhaften Weiterbildung der erfindungsgemäßen Ankerschiene ist die Verzahnung der Schenkel in dem dem Schlitz benachbarten Bereich der Schenkel tiefer als in dem weiter vom Schlitz entfernten Bereich der Schenkel ausgebildet. Vorteilhaft ist die Verzahnung des Rastungselements des erfindungsgemäßen Befestigungssystems entsprechend angepasst, so dass die Verzahnung des Rastungselements vollständig in die Verzahnung der Schenkel der Ankerschiene eingreift. Eine tiefere Verzahnung vergrößert so die gemeinsame Kontaktfläche zwischen den Schenkeln der Ankerschiene und dem Rastungselement. Dadurch ist ein besserer Halt des Rastungselements auf den Schenkeln der Ankerschiene gewährleistet. Der Übertrag der Gewichtskraft des befestigten Gegenstands auf die Ankerschiene kann durch eine Vertiefung der Verzahnung von Rastungselement und Schenkeln der Ankerschiene weiter verbessert werden. Im Bereich des Übergangs von den Schenkeln der Ankerschiene zu den Seitenwänden der Ankerschiene könnte eine Vertiefung der Verzahnung der Schenkel jedoch zu einer geringeren Stabilität der Schenkel gegenüber einer möglichen Verbiegung der Schenkel in Richtung weg von den Ankern unter der Belastung durch die Gewichtskraft des befestigten Gegenstands führen. Um den Vorteil einer besseren Kraftübertragung durch eine tiefere Verzahnung ohne eine Verringerung der Stabilität der Schenkel gegenüber einem Aufbiegen unter Belastung zu erlangen, ist vorgesehen, dass die Tiefe der Verzahnung der Schenkel vom Bereich der Schenkel nahe der Seitenwände zum Bereich der Schenkel nahe des Schlitzes hin zunimmt. So ergibt sich eine Balance zwischen der Stabilität der Schenkel und dem Halt der Verzahnung des Rastungselements in der Verzahnung der Schenkel.

In einer weiteren vorteilhaften Weiterbildung der erfindungsgemäßen Ankerschiene ist vorgesehen, dass die Wandstärke der Schenkel von den Seitenwänden der Ankerschiene zum Schlitz der Ankerschiene hin zunimmt. Auf diese Weise kann die Verzahnung der Schenkel in der Nähe des Schlitzes der Ankerschiene tiefer ausgebildet werden als in der Nähe der Seitenwände und gleichzeitig die Dicke der Schenkel ohne Berücksichtigung der Zähne über die gesamte Erstreckung der Schenkel gleich sein. So ist die Stabilität der Schenkel über ihre gesamte Ausdehnung homogen. Es kann jedoch auch vorteilhaft sein, dass die Wandstärke der Schenkel von den Seitenwänden zum Schlitz der Ankerschiene hin abnimmt.

Vorteilhaft bilden die dem Anker zugewandten ebenen innenseitigen Oberflächen der Schenkel mit den Seitenwänden einen Winkel < 90°. So weisen die mit den Seitenwänden verbundenen Schenkel in einem Querschnitt quer zur Längsrichtung der Ankerschiene ein hakenförmiges Profil auf. Vorteilhaft korrespondiert das Profil der zur Befestigung des zu befestigenden Gegenstands eingebrachten Kopfschraube mit dem Profil der innenseitigen Oberflächen der Schenkel. Die dem Gewindeschaft abgewandte Seite des Kopfes der Kopfschraube ist eben und orthogonal zum Gewindeschaft orientiert. Die dem Gewindeschaft zugewandte Oberfläche des Kopfes der Kopfschraube bildet mit dem Gewindeschaft einen Winkel < 90° und entspricht der Größe der Winkel, die die Seitenwände und die Schenkel einschließen. Beim Befestigen der Kopfschraube zwischen den Schenkeln der Ankerschiene kommen die dem Gewindeschaft zugewandten Oberflächen der Kopfschraube und die innenseitigen, dem Anker zugewandten Oberflächen der Schenkel der Ankerschiene bündig aufeinander zu liegen. In einem Querschnitt quer zur Längsachse der Ankerschiene durch die Kopfschraube weist der Kopf der Kopfschraube ein doppelt hakenförmiges Profil auf. Wirkt eine Querkraft auf den parallel zu den Seitenwänden der Ankerschiene orientierten Gewindeschaft quer zur Längsrichtung der Ankerschiene und quer zur Längsrichtung des Ankers, wird der Gewindeschaft nicht nur über seinen Kontakt zu einer Stirnfläche des einen Schenkels in seiner Position gehalten, sondern auch, weil die ihm zugewandte Oberfläche des ihm zugehörigen Kopfs in Kontakt mit dem anderen Schenkel steht. Die an der Kopfschraube angreifende Querkraft wird also anstatt über nur einen Schenkel über beide Schenkel in die Ankerschiene geleitet. Dies erhöht die Stabilität des Befestigungssystems gegenüber Kräften, die quer zur Längsrichtung der Ankerschiene und quer zur Längsrichtung des Ankers auf die Kopfschraube wirken.

In einer weiteren vorteilhaften Weiterbildung der erfindungsgemäßen Ankerschiene ist vorgesehen, dass die Schenkel der Ankerschiene und zumindest der an die Schenkel angrenzende Teil der Seitenwände der Ankerschiene orthogonal zueinander orientiert sind. Dabei liegen die dem Anker abgewandten Oberflächen der Schenkel in derselben Ebene. Vorteilhaft sind die Schenkel an den dem Anker abgewandten Enden der Seitenwände angeordnet, so dass die Seitenwände mit den Schenkeln Außenkanten der Ankerschiene bilden. Dadurch kann die Ankerschiene so in Beton eingegossen werden, dass die Oberflächen der Schenkel in einer Ebene mit der Oberfläche des die Ankerschiene umgebenden Betons liegen. So ist ein bündiger Übergang von den Schenkeln der Ankerschiene zu der Betonoberfläche möglich. Dadurch kann die Ankerschiene auf unauffällige und ansprechende Weise in den Beton integriert werden. Dies ist beispielsweise bei der Verwendung von Ankerschienen in Fassaden von Gebäuden sehr vorteilhaft. Bei dieser Weiterbildung der Ankerschiene kann vorteilhaft vorgesehen sein, dass sich die Verzahnung der Schenkel über die gesamte dem Anker abgewandte Fläche der Schenkel der Ankerschiene erstreckt. So ergibt sich ein einheitliches von außen wahrnehmbares Erscheinungsbild der Ankerschiene, und gleichzeitig wird durch die volle Ausnutzung der dem Anker abgewandten Flächen der Schenkel für die Verzahnung die Stabilität des Befestigungssystems erhöht, da dadurch die Oberfläche der Schenkel, die die Gewichtskraft des befestigten Gegenstands aufnimmt, vergrößert wird.

Es ist gemäß der Erfindung vorgesehen, dass die Seitenwände der Ankerschiene die freien Schenkel überragen. Wenn das Rastungselement getrennt vom zu befestigenden Gegenstand ausgebildet ist, ist es eben vorteilhaft, wenn die Seitenwände der Ankerschiene die freien Schenkel der Ankerschiene überragen. Das getrennt vom zu befestigenden Gegenstand ausgebildete Rastungselement ist in befestigtem Zustand des Gegenstands zwischen dem befestigten Gegenstand und den freien Schenkeln der Ankerschiene angeordnet. Vorteilhaft weist der zu befestigende Gegenstand eine Öffnung zur Befestigung des Gewindeschafts der Kopfschraube auf. Die Seitenwände der Ankerschiene überragen die freien Schenkel der Ankerschiene vorteilhaft um die Randdicke des getrennt vom zu befestigenden Gegenstand ausgebildeten Rastungselements. Mit Randdicke ist hierbei die Dicke der Ränder des getrennt vom zu befestigenden Gegenstand ausgebildeten Rastungselements gemeint, die bei Verwendung eines getrennt vom zu befestigenden Gegenstand ausgebildeten Rastungselements als Teil eines Befestigungssystems den Seitenwänden zugewandt sind. Dadurch ist es möglich, dass die unverzahnte, dem Anker abgewandte Oberfläche des getrennt vom zu befestigenden Gegenstand ausgebildeten Rastungselements mit den Stirnseiten der Seitenwände in einer Ebene liegt. Die der Verzahnung abgewandte Fläche des getrennt vom zu befestigenden Gegenstand ausgebildeten Rastungselements ist eben. So kann die unverzahnte ebene Fläche des getrennt vom zu befestigenden Gegenstand ausgebildeten Rastungselements mit der Oberfläche des die Ankerschiene umgebenden Betons in einer Ebene liegen. Ein zu befestigender Gegenstand kann dadurch mit dem erfindungsgemäßen Befestigungssystem so befestigt werden, dass er nicht nur auf der unverzahnten ebenen Fläche des getrennt vom zu befestigenden Gegenstand ausgebildeten Rastungselements, sondern auch auf dem die Ankerschiene umgebenden Beton - beispielsweise einer Hauswand - anliegt. Dies erhöht die Stabilität der Befestigung insgesamt. So ist die Entstehung von Winddruck oder Windsog in einem Zwischenraum zwischen Beton und befestigtem Gegenstand kaum möglich. Die überstehenden Seitenwände verhindern, dass beim Eingießen der Ankerschiene in Beton Beton an die freien Schenkel oder den Innenraum der Ankerschiene gelangen kann.

Weiterhin vorteilhaft entspricht die Breite des getrennt vom zu befestigenden Gegenstand ausgebildeten Rastungselementsdem Abstand der Innenseiten der Seitenwände. So formen die Stirnseiten der Seitenwände und die ebene unverzahnte, dem Anker abgewandte Oberfläche des getrennt vom zu befestigenden Gegenstand ausgebildeten Rastungselements im befestigten Zustand des Gegenstands eine bündige ebene Fläche. Kräfte quer zur Längsrichtung der Ankerschiene werden so vom getrennt vom befestigten Gegenstand ausgebildeten Rastungselementüber die den Seitenwänden zugewandten Stirnseiten des getrennt vom befestigten Gegenstand ausgebildeten Rastungselements auf die Seitenwände übertragen. Dies führt zu einer weiteren Erhöhung der Stabilität des Befestigungssystems insgesamt. Die Aufnahme von Kräften quer zur Längsrichtung der Ankerschiene durch die Seitenwände ist insbesondere bei einem Einbau der Ankerschiene, bei dem ihre Längsrichtung und die Längsrichtung ihrer Anker horizontal oder zumindest nicht vollständig vertikal orientiert ist, von Vorteil. Die Gewichtskraft eines an einer so verbauten Ankerschiene befestigten Gegenstands wirkt in Vertikalrichtung quer zur Längsrichtung oder zumindest nicht vollständig in Längsrichtung der Ankerschiene und der Anker. Die Seitenwände nehmen dann einen Teil der Gewichtskraft direkt über das Rastungselement auf, was zu einer Erhöhung der maximal möglichen Traglast führt.

Bei der Erfindung mit Seitenwänden, die die Schenkel überragen, ist vorteilhaft vorgesehen, dass sich die Verzahnung der Außenseiten der Schenkel von dem Schlitz der Ankerschiene bis etwa zu den Ebenen erstreckt, in denen auch die Innenwände der Seitenwände liegen. Dadurch wird die Oberfläche der Schenkel, auf die die Gewichtskraft des befestigten Gegenstands über das Rastungselement übertragen wird, vergrößert. Auf diese Weise verteilt sich die übertragene Gewichtskraft auf eine größere Fläche, und die Stabilität des Befestigungssystems wird erhöht.

In vorteilhafter Weiterbildung der erfindungsgemäßen Ankerschiene ist vorgesehen, dass die Ankerschiene einen Boden umfasst, an dem die Anker angeordnet sind. Die Seitenwände sind senkrecht in Bezug auf den Boden angeordnet. Die Seitenwände bilden mit dem Boden Außenkanten. Die beiden Seitenwände verlaufen parallel zueinander. Die freien Schenkel sind auf gleicher Höhe an den dem Boden abgewandten Bereichen der Seitenwände senkrecht zu den Seitenwänden angeordnet. Die freien Schenkel können jedoch auch in einem anderen Winkel zu den Seitenwänden orientiert sein. Durch die senkrechte Orientierung der Seitenwände zum Boden können quer zur Längsrichtung der Ankerschiene auftretende Kräfte effizient über die senkrechten Seitenwände in den Beton abgeleitet werden. Hierbei werden die auftretenden Kräfte zunächst über die Kopfschraube und/oder die freien Schenkel auf die Seitenwände übertragen. Die senkrechte Orientierung der Seitenwände zu dem Boden ermöglicht weiterhin die Aufnahme von typischen Kopfschrauben in die Ankerschiene. Insbesondere ist die Querschnittsgeometrie einer so gefertigten Ankerschiene optimal auf den entsprechenden Querschnitt einer Hammerkopfschraube abgestimmt.

In vorteilhafter Weiterbildung des erfindungsgemäßen Befestigungssystems ist vorgesehen, dass das Rastungselement und die Verzahnung des Rastungselements an die Winkelstellung der freien Schenkel und an die Verzahnung der freien Schenkel so angepasst sind, dass im befestigten Zustand des zu befestigenden Gegenstands die Verzahnung des Rastungselements mit mindestens 80% ihrer Oberfläche formschlüssig auf den dem Anker abgewandten Seiten der Schenkel der Ankerschiene aufliegt. Auf diese Weise wird die Kontaktfläche zwischen Rastungselement und freien Schenkeln groß. Dadurch wird die Übertragung der Gewichtskraft des befestigten Gegenstands auf die Ankerschiene verbessert. Dadurch wird die maximal mögliche Traglast des Befestigungssystems erhöht. Darüber hinaus kann sich zwischen den Zähnen der Verzahnung des Rastungselements und den Zähnen der Verzahnung der freien Schenkel weniger Feuchtigkeit ansammeln, wodurch Rost vermieden und die Lebensdauer des Befestigungssystems verlängert wird. Der befestigte Zustand des zu befestigenden Gegenstands entspricht einem befestigten Zustand des Rastungselements. Im befestigten Zustand des Rastungselements ist das Rastungselement fest mit der Ankerschiene verbunden. Die Oberfläche der Verzahnung ist durch die gesamte, im befestigten Zustand des Gegenstands, dem Anker der Ankerschiene zugewandte Oberfläche der Verzahnung gebildet. Insbesondere ist die Oberfläche der Verzahnung durch die Summe der Flächen aller Flanken der einzelnen Zähne der Verzahnung gebildet.

Zweckmäßig ist ein befestigter Gegenstand mittels einer Befestigungsmutter auf dem Gewindeschaft der Kopfschraube befestigt. Vorteilhaft ist zwischen dem befestigten Gegenstand und der Befestigungsmutter eine Tellerfeder angeordnet. Die Tellerfeder hält über eine längere Zeit das Einzugsdrehmoment zwischen der Befestigungsmutter und der Kopfschraube aufrecht. Auf diese Weise wird der Lockerung der Schraubverbindung, der sogenannten Relaxation, entgegengewirkt.

Vorteilhaft ist die Ankerschiene einteilig aus kaltgewalztem Stahl gefertigt. Dies trägt zu einer größeren Stabilität der Ankerschiene bei. Insbesondere die erhöhte Festigkeit der Ankerschiene sorgt für eine Erhöhung der maximal tragbaren Traglast des Befestigungssystems. Durch die erhöhte Festigkeit der Ankerschiene wird einem Verbiegen der Ankerschiene bei Belastung durch die Gewichtskraft eines befestigten Gegenstands entgegengewirkt. Darüber hinaus ist eine Herstellung im Kaltwalzverfahren deutlich kostengünstiger und energiesparender als die Herstellung im Warmwalzverfahren. Auf diese Weise kann unter Einsatz einer kleineren Energiemenge eine stabilere Ankerschiene hergestellt werden. Das Rastelement kann vorteilhaft aus Bandstahl hergestellt sein, der durch Stanzen abgelängt wurde und in den durch Pressen die Verzahnung eingebracht wurde.

Vorteilhaft weist die Ankerschiene zur Verankerung im Beton einen im Wesentlichen C-förmigen Querschnitt auf, wobei die Ankerschiene einen im Querschnitt im Wesentlichen U-förmigen Grundkörper, zwei freie Schenkel und mindestens einen Anker umfasst, wobei der Grundkörper einen Boden und zwei Seitenwände umfasst, wobei die zwei freien Schenkel gegenüberliegend dem Boden des Grundkörpers angeordnet sind, wobei der zumindest eine Anker an dem Boden angeordnet ist, wobei zwischen den freien Schenkeln ein Schlitz in Längsrichtung der Ankerschiene gebildet ist. Vorteilhaft ist die Ankerschiene dadurch gekennzeichnet, dass die Ankerschiene mindestens eine Verdickung am Grundkörper aufweist.

Vorteilhaft weist die Ankerschiene zur Verankerung im Beton einen im Wesentlichen C-förmigen Querschnitt auf, wobei die Ankerschiene einen im Querschnitt im Wesentlichen U-förmigen Grundkörper, zwei freie Schenkel und mindestens einen Anker umfasst, wobei die zwei freien Schenkel gegenüberliegend zum Anker am Grundkörper angeordnet sind, wobei zwischen den freien Schenkeln ein Schlitz in Längsrichtung der Ankerschiene gebildet ist. Vorteilhaft ist die Ankerschiene dadurch gekennzeichnet, dass der Grundkörper an seiner dem Beton zugewandten Außenseite zumindest teilweise eine Profilierung aufweist.

Ausführungsbeispiele der Erfindung werden im Folgenden anhand der Zeichnungen erläutert. Es zeigen lediglich die Fig. 1, 2, 12, 13, 14, 17-23 und 28 Ankerschienen, die unter den Schutzumfang der Erfindung fallen:
- Fig. 1: eine perspektivische Darstellung einer Ankerschiene,
- Fig. 2: eine Ansicht der Ankerschiene aus Fig. 1 von einem Längsende der Ankerschiene aus in Richtung des Pfeils II in Fig. 1,
- Fig. 3 bis 11: Teildarstellungen von Schnitten quer zur Längsrichtung von Ankerschienen ohne Darstellung der Anker,
- Fig. 12: eine perspektivische Darstellung eines Befestigungssystems, die Ankerschiene aus Fig. 1 umfassend,
- Fig. 13: eine Ansicht des Befestigungssystems aus Fig. 12 von einem Längsende der Ankerschiene aus in Richtung des Pfeils XIII in Fig. 12,
- Fig. 14: eine Explosionsdarstellung des Befestigungssystems aus den Figuren 12 und 13,
- Fig. 15: eine Ansicht in Richtung der Längsrichtung der Ankerschiene eines Befestigungssystems mit verfahrbarem Zahnradeinsatz,
- Fig. 16: einen Schnitt längs der in Fig. 15 gekennzeichneten Linie XVI-XVI,
- Fig. 17: eine perspektivische Darstellung einer Ankerschiene,
- Fig. 18: eine Ansicht der Ankerschiene aus Fig. 17 in Richtung des Pfeils XVIII in Fig. 17,
- Fig. 19: eine perspektivische Darstellung eines Befestigungssystems, die Ankerschiene aus Fig. 17 umfassend,
- Fig. 20: eine Ansicht des Befestigungssystems aus Fig. 19 von einem Längsende der Ankerschiene aus in Richtung des Pfeils XX in Fig. 19,
- Fig. 21: eine Explosionsdarstellung des Befestigungssystems aus den Figuren 19 und 20,
- Fig. 22: eine perspektivische Darstellung eines Befestigungssystems ohne Darstellung von Ankern und ohne Darstellung eines zu befestigenden Gegenstands,
- Fig. 23: eine Ansicht des Befestigungssystems aus Fig. 22 in Richtung des Pfeils XXIII in Fig. 22 ohne Darstellung von Ankern und ohne Darstellung eines zu befestigenden Gegenstands,
- Fig. 24: eine perspektivische Darstellung des getrennt von einem zu befestigenden Gegenstand ausgebildeten Rastungselements des Befestigungssystems aus den Figuren 22 und 23,
- Fig. 25: eine perspektivische Darstellung eines Rastungsplatteneinsatzes für das Rastungselement aus Fig. 24,
- Fig. 26: eine Draufsicht auf das Rastungselement aus Fig. 24 in Richtung des Pfeils XXVI in Fig. 24,
- Fig. 27: eine Ansicht des Rastungselements aus den Figuren 24 und 26 in Richtung des Pfeils XXVII in Fig. 26,
- Fig. 28: eine Explosionsdarstellung eines Befestigungssystems, bei dem das Rastungselement einteilig mit dem zu befestigenden Gegenstand ausgebildet ist, und
- Fig. 29: eine perspektivische Darstellung des zu befestigenden Gegenstands aus Fig. 28.

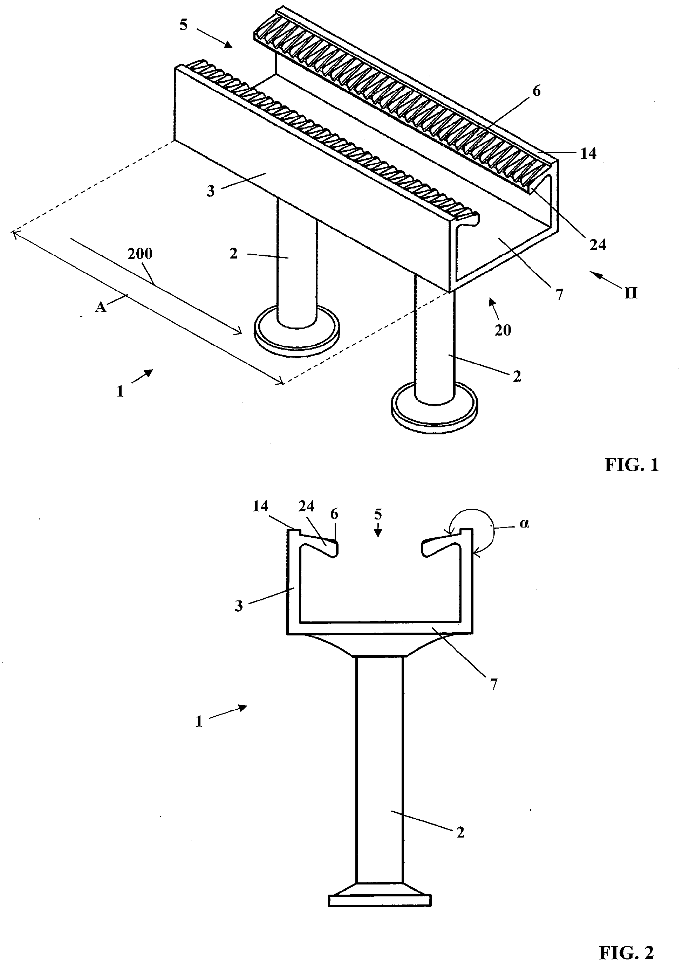

Fig. 1 zeigt die perspektivische Darstellung einer Ankerschiene 1. Solche Ankerschienen werden beispielsweise in Beton eingegossen. Zur Verankerung der Ankerschiene 1 im Beton sind Anker 2 vorgesehen. Die Anker 2 sind orthogonal zu einem ebenen Boden 7 angeordnet. Die Anker 2 sind bezogen auf die Richtung quer zur Längsrichtung 200 der Ankerschiene 1 in der Mitte des Boden 7 angeordnet. Im Ausführungsbeispiel nach der Fig. 1 sind orthogonal zum Boden 7 der Ankerschiene 1 Seitenwände 3 angeordnet. Die zwei Seitenwände 3 verlaufen parallel zueinander. Die Seitenwände 3 bilden gemeinsam mit dem Boden 7 Außenkanten eines Grundkörpers 20 der Ankerschiene 1. Der Grundkörper 20 besitzt einen im Wesentlichen U-förmigen Querschnitt. An dem dem Boden 7 abgewandten Bereich der Seitenwände 3 sind auf gleicher Höhe freie Schenkel 24 angeordnet. Die Seitenwände 3 überragen die freien Schenkel 24. Der den Ankern 2 abgewandte Bereich der Seitenwände 3 wird bei beiden Seitenwänden 3 auf gleicher Höhe durch Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einer Ansicht der Ankerschiene 1 von einem Längsende der Ankerschiene 1 aus in Richtung entgegen der in Fig. 1 eingezeichneten Längsrichtung 200 zeigen die beiden Schenkel 24, wie in Fig. 2 dargestellt, ein hakenförmiges Profil. Die Wandstärke der Schenkel 24 nimmt von den Seitenwänden 3 der Ankerschiene 1 zum Schlitz 5 der Ankerschiene 1 hin zu. Es kann aber auch vorgesehen sein, dass die Wandstärke der Schenkel 24 von den Seitenwänden 3 der Ankerschiene 1 zum Schlitz 5 der Ankerschiene 1 hin abnimmt. Die den Ankern abgewandten Oberflächen der freien Schenkel 24 sind mit einer Verzahnung 6 versehen. Die Verzahnung 6 der freien Schenkel 24 ist quer zur Längsrichtung 200 der Ankerschiene 1 orientiert. Im Ausführungsbeispiel ist die Verzahnung 6 in einem Winkel von 90° zur Längsrichtung 200 orientiert. Es kann auch vorgesehen sein, dass die Verzahnung 6 in einem anderen Winkel zur Längsrichtung 200 der Ankerschiene 1 ausgerichtet ist. Insbesondere kann die Verzahnung in einem Winkel von 60° bis 120° zur Längsrichtung 200 der Ankerschiene 1 orientiert sein. Die den Ankern abgewandte Seite der Schenkel 24 wird auch als vordere Außenseite der Ankerschiene 1 bezeichnet. Bezogen auf die Längserstreckung A der Ankerschiene 1 besitzen die freien Schenkel 24 an der vorderen Außenseite der Ankerschiene 1 eine durchgehende Verzahnung 6. Die Verzahnung 6 der Außenseiten der Schenkel 24 erstreckt sich vom Schlitz 5 der Ankerschiene 1 bis etwa zu den Ebenen, in denen auch die Innenwände der Seitenwände 3 liegen.

Fig. 2 zeigt eine Ansicht der Ankerschiene 1 aus Fig. 1 in Richtung des Pfeils II in Fig. 1 und entgegen der in Fig. 1 eingezeichneten Längsrichtung 200 der Ankerschiene 1. In Fig. 2 ist zu erkennen, dass die Verzahnung 6 der Schenkel 24 in dem dem Schlitz 5 benachbarten Bereich der Schenkel 24 tiefer ist als im weiter vom Schlitz 5 entfernten Bereich der Schenkel 24. Es kann aber auch vorgesehen sein, dass die Verzahnung 6 der Schenkel 24 im weiter vom Schlitz 5 entfernten Bereich der Schenkel 24 tiefer ist als in dem dem Schlitz 5 benachbarten Bereich der Schenkel 24. Die den Ankern 2 abgewandten Oberflächen der freien Schenkel 24 schließen mit den Außenseiten der Seitenwände 3 einen Winkel α ein, der größer als 270° ist. Der Winkel α ist dabei an der Außenseite der Ankerschiene 1 gemessen. Die Höhe der Seitenwände 3 erstreckt sich in Längsrichtung des Ankers 2 und orthogonal zur Längsrichtung 200 der Ankerschiene 1. Der Abstand der beiden parallel zueinander verlaufenden Seitenwände 3 beträgt in etwa doppelt so viel wie die Breite des Schlitzes 5. Die Breite des Schlitzes 5 ist hierbei der kleinste Abstand der beiden gegenüberliegenden Schenkel 24.

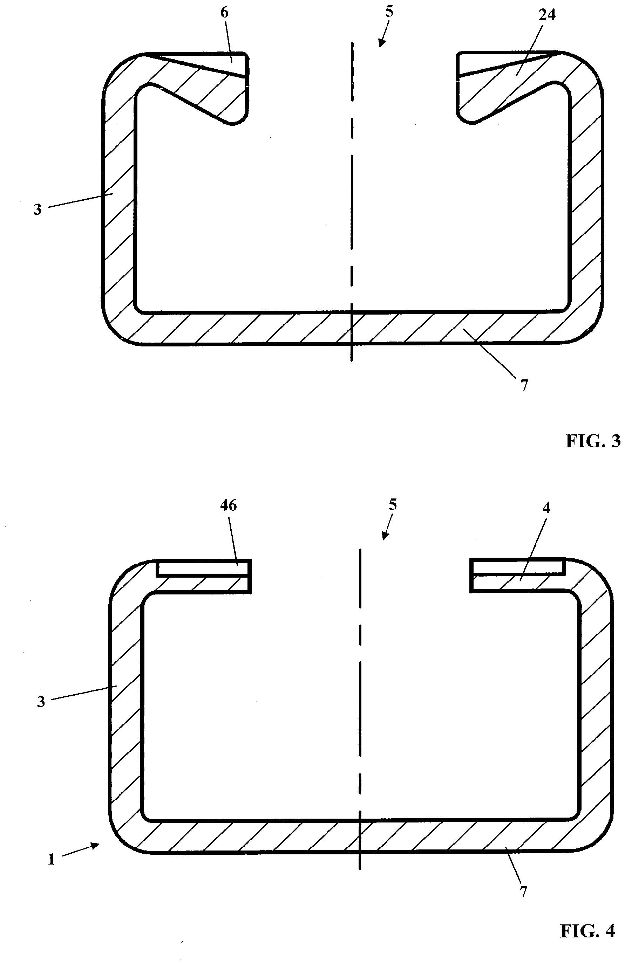

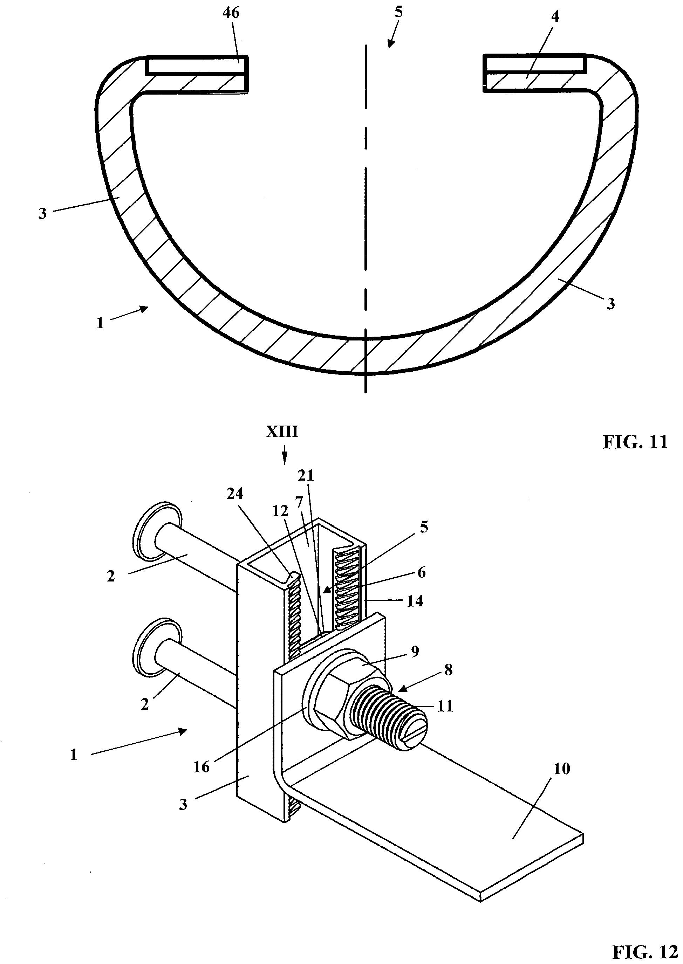

Die Figuren 3 bis 11 zeigen Teildarstellungen von Schnitten quer zur Längsrichtung von Ankerschienen an Stellen zwischen zwei Ankern. Auf die Darstellung der Anker wurde in den Figuren 3 bis 11 verzichtet. Tatsächlich sind in allen Ausführungsbeispielen gemäß der Figuren 3 bis 11 Anker gegenüber der freien Schenkel der jeweiligen Ankerschiene analog zum Ausführungsbeispiel gemäß der Fig. 1 vorgesehen. Alle Figuren 3 bis 11 zeigen einen im Wesentlichen C-förmigen Querschnitt der Ankerschiene 1. Die Figuren 3 bis 10 zeigen Ankerschienen 1 mit jeweils einem ebenen Boden 7. Dahingegen umfasst die Ankerschiene gemäß der Fig. 11 keinen ebenen Boden. Hier gehen die beiden Seitenwände 3 direkt ineinander über und bilden einen U-förmigen Grundkörper 20, an den sich die beiden gegenüberliegenden freien Schenkel 4 anschließen. Dabei bilden die freien Schenkel 4 mit dem U-förmigen Grundkörper 20 Außenkanten.

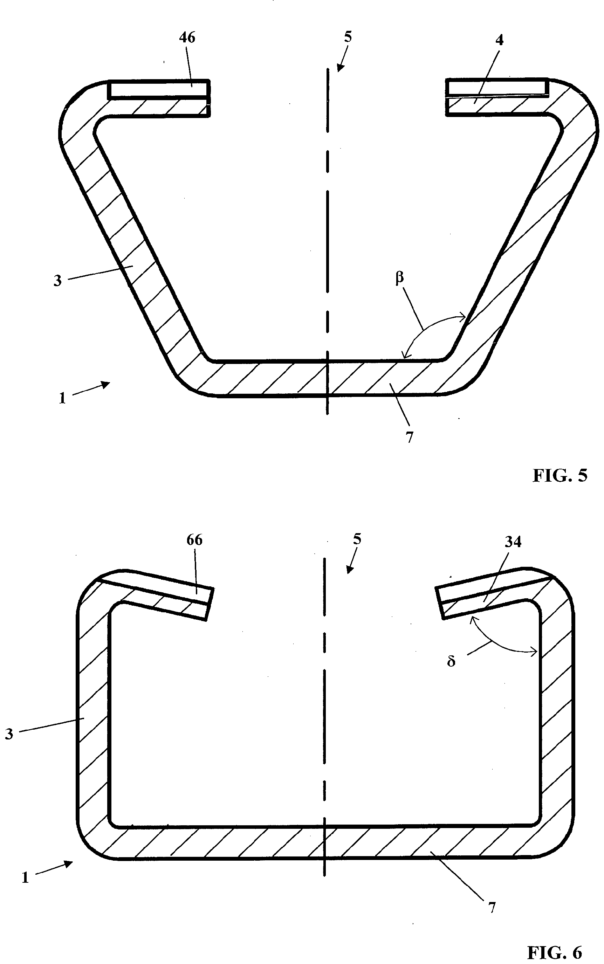

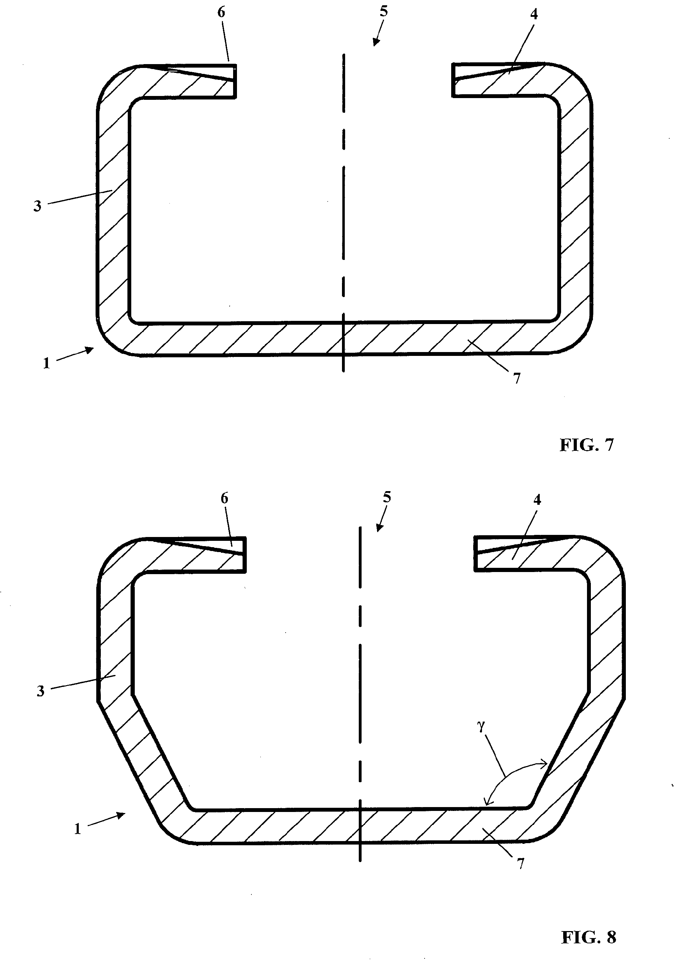

Bei den Ankerschienen 1 nach den Figuren 3, 4, 6, 7, 9 und 10 sind die sich gegenüberliegenden Seitenwände 3 ausschließlich orthogonal zum Boden 7 angeordnet. Dabei bilden die Seitenwände 3 mit dem Boden 7 Außenkanten. Bei der Ankerschiene 1 gemäß der Fig. 5 sind die beiden Seitenwände 3 eben ausgebildet und schließen mit dem Boden 7 einen Winkel β ein, der größer als 90° ist. Bei der Ankerschiene 1 nach der Fig. 8 sind die beiden Seitenwände 3 nicht eben ausgebildet, sondern weisen ungefähr auf halber Höhe in Richtung der Längsrichtung des nicht abgebildeten Ankers einen Knick auf. Im weiter entfernten Bereich der Seitenwände 3 verlaufen die Seitenwände 3 orthogonal zum Boden 7. In dem dem Boden 7 näher liegenden Bereich der Seitenwände 3 schließen die Seitenwände 3 und der Boden 7 einen Winkel γ ein. Der Winkel γ ist > 90° ein.

Die freien Schenkel 4 der Ankerschienen 1 gemäß der Figuren 4, 5, 7, 8, 9, 10 und 11 weisen eine im Verlauf von den Seitenwänden 3 zu dem Schlitz 5 unveränderlich gleiche Wandstärke auf. Für die Ankerschienen 1 gemäß der Figuren 4, 5, 7, 8, 9 und 10 verlaufen die freien Schenkel 4 parallel zu dem ebenen Boden 7. Die freien Schenkel 4 der Ankerschiene 1 gemäß der Fig. 11 sind im am weitesten von den Ankern 2 entfernt liegenden Bereich der Seitenwände 3 im rechten Winkel von den Seitenwänden 3 abgeknickt. Für alle Ausführungsbeispiele gemäß der Figuren 3 bis 11 sind die sich gegenüberliegenden freien Schenkel 4, 24, 34 auf gleicher Höhe an dem dem Boden 7 oder dem dem nicht gezeigten Anker abgewandten Bereich der Seitenwände 3 angeordnet. Die freien Schenkel 4 der Ankerschienen 1 gemäß der Ausführungsbeispiele aus den Figuren 4, 7, 9 und 10 sind senkrecht zu den Seitenwänden 3 angeordnet. In der Fig. 8 ist zumindest der an die Schenkel 4 angrenzende Teil der Seitenwände 3 der Ankerschiene 1 orthogonal zu den freien Schenkeln 4 orientiert. Die den nicht gezeigten Ankern abgewandten Oberflächen der Schenkel 4, 24 der Ankerschiene 1 gemäß den Ausführungsbeispielen nach den Figuren 3, 4, 5, 7, 8, 9, 10 und 11 liegen in derselben Ebene.

Die Wandstärke der Schenkel 24 der Ankerschiene 1 gemäß der Fig. 3 nimmt von den Seitenwänden 3 der Ankerschiene 1 zum Schlitz 5 der Ankerschiene 1 hin zu. Die freien Schenkel 34 der Ankerschiene 1 gemäß der Fig. 6 sind nach innen hin geknickt. Die freien Schenkel 34 bilden mit den Seitenwänden 3 einen Winkel δ. Der Winkel δ ist < 90°. Der Abstand zwischen dem Bereich der freien Schenkel 34, der näher zum Schlitz 5 der Ankerschiene 1 hin liegt, und dem Boden 7 ist kleiner als der Abstand zwischen dem Bereich der freien Schenkel 34, der näher zu den Seitenwänden 3 hin liegt, und dem Boden 7.

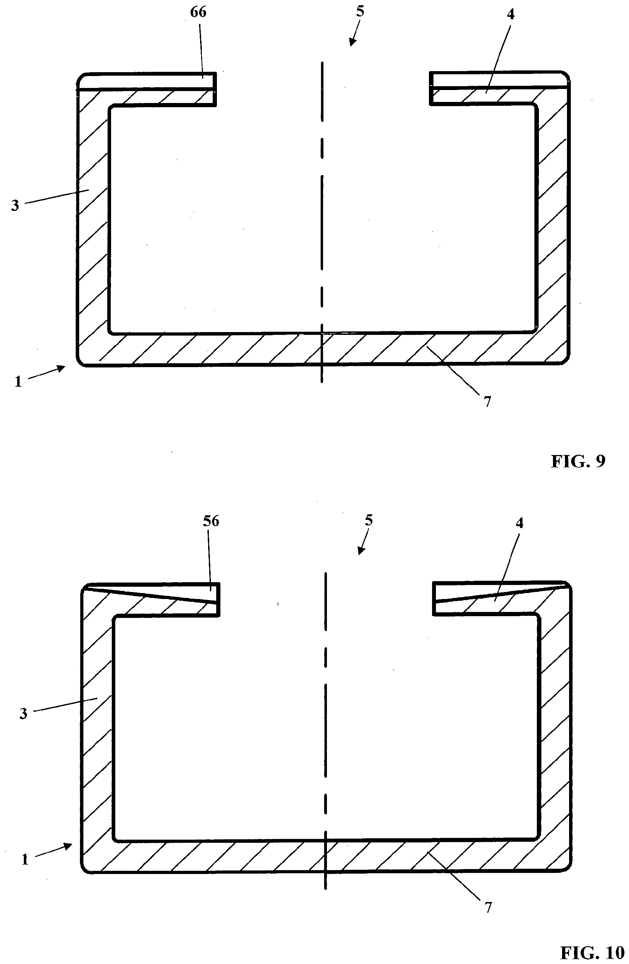

Die freien Schenkel 4, 24, 34 der Ankerschiene 1 nach den Figuren 3 bis 11 weisen eine Verzahnung 6, 46, 56, 66 auf. Die Verzahnungen 6 der freien Schenkel 24 der Ankerschiene 1 nach der Fig. 3, die Verzahnungen 6 der freien Schenkel 4 der Ankerschienen 1 nach den Figuren 7 und 8 und die Verzahnungen 56 der freien Schenkel 4 der Ankerschiene 1 gemäß der Fig. 10 sind in dem dem Schlitz 5 benachbarten Bereich der Schenkel 4, 24 tiefer als im weiter vom Schlitz 5 entfernten Bereich der Schenkel 4, 24. Die Verzahnungen 46 der freien Schenkel 4 der Ankerschienen 1 nach den Figuren 4, 5 und 11 sind im gesamten Bereich der Verzahnung 46 gleich tief ausgebildet. Die Verzahnung 66 der nach innen geknickten Schenkel 34 der Ankerschiene 1 nach der Fig. 6 ist über den gesamten Bereich der Verzahnung 66 gleich tief ausgebildet. Die Verzahnung 66 der Schenkel 4 der Anschiene 1 nach der Fig. 9 ist über den gesamten Bereich der Verzahnung 66 gleich tief ausgebildet.

Die Verzahnungen 6 der Außenseiten der Schenkel 24 der Ankerschiene 1 gemäß der Fig. 3 erstrecken sich von dem Schlitz 5 der Ankerschiene 1 bis etwa zu den Ebenen, in denen auch die Innenwände der Seitenwände 3 liegen. Die Verzahnungen 46 der Außenseiten der Schenkel 4 der Ankerschienen 1 gemäß den Figuren 4 und 5 erstrecken sich von dem Schlitz 5 der Ankerschiene 1 bis etwa zu den Ebenen, in denen auch die Innenwände der Seitenwände 3 liegen. Die Verzahnungen 46 der Außenseiten der Schenkel 4 der Ankerschiene 1 gemäß der Fig. 11 erstrecken sich nicht über die gesamte Außenseite der freien Schenkel 4. Im am weitesten vom Schlitz 5 entfernten Bereich der Außenseite der freien Schenkel 4 ist die Außenseite der freien Schenkel 4 über eine Länge, die in etwa der Breite der Wandstärke der Seitenwände 3 entspricht, unverzahnt. Die Verzahnungen 46 der Außenseiten der freien Schenkel 4 erstrecken sich von diesem Bereich bis hin zum Schlitz 5. Die Verzahnungen 6 der Außenseiten der Schenkel 4 der Ankerschienen 1 nach den Figuren 7 und 8 erstrecken sich von dem Schlitz 5 der Ankerschiene 1 bis etwa zu den Ebenen, in denen auch zumindest die den freien Schenkeln 4 am nächsten liegenden Bereiche der Innenwände der Seitenwände 3 liegen.

Alle in den Figuren 3 bis 11 gezeigten Verzahnungen der Ankerschienen 1 können jedoch auch als Verzahnungen 56, 66 ausgebildet sein, die sich über die gesamte dem nicht gezeigten Anker abgewandte Fläche der Schenkel 4, 24, 34 der Ankerschiene 1 erstrecken. Ein Beispiel hierfür ist in der Fig. 6 gezeigt. Die Verzahnungen 66 der freien Schenkel 34 erstrecken sich über die gesamte dem nicht gezeigten Anker abgewandte Fläche der Schenkel 34 der Ankerschiene 1. Die dem nicht gezeigten Anker abgewandten Flächen der freien Schenkel 34 bilden die Außenseiten der freien Schenkel 34. Die dem nicht gezeigten Anker abgewandten Flächen der freien Schenkel 34 sind dem Boden 7 abgewandt. Auch im Ausführungsbeispiel nach der Fig. 9 erstrecken sich die Verzahnungen 66 der freien Schenkel 4 über die gesamte dem nicht gezeigten Anker abgewandte Fläche der freien Schenkel 4 der Ankerschiene 1. Auch die Verzahnungen 56 der freien Schenkel 4 der Ankerschiene 1 gemäß der Fig. 10 erstrecken sich über die gesamte dem nicht gezeigten Anker abgewandte Fläche der Schenkel 4 der Ankerschiene 1.

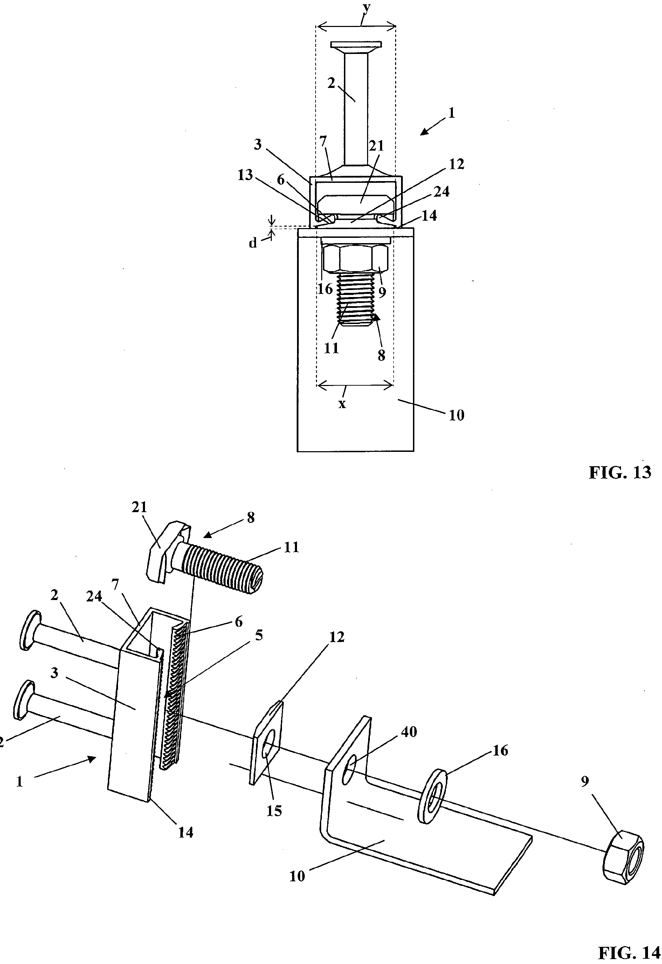

Die Fig. 12 zeigt die perspektivische Darstellung eines Befestigungssystems zur Sicherung einer Kopfschraube 8 innerhalb einer im Beton zu befestigenden Ankerschiene 1. Die Fig. 13 zeigt eine Ansicht des Befestigungssystems aus der Fig. 12 in Richtung des in Fig. 12 mit XIII gekennzeichneten Pfeils, also in Längsrichtung der Ankerschiene 1 des Befestigungssystems. Die Fig. 14 zeigt eine Explosionsdarstellung des in den Figuren 12 und 13 gezeigten Befestigungssystems. Die Ankerschiene 1 entspricht in den Figuren 12, 13 und 14 der in der Fig. 1 dargestellten Ankerschiene. Mit Hilfe der Kopfschraube 8 ist ein Gegenstand 10 an der Ankerschiene 1 befestigt. Die Kopfschraube 8 umfasst einen Kopf 21, mit dem sie in der Ankerschiene 1 gehalten wird. Hierbei hintergreift der Kopf 21 der Kopfschraube 8 die Schenkel 24 der Ankerschiene 1. Typischerweise ist die Kopfschraube 8 eine Hammerkopfschraube. Zur Einbringung des Kopfes 21 der Hammerkopfschraube wird die Längsrichtung des Hammerkopfes parallel zur Längsrichtung 200 der Ankerschiene 1 ausgerichtet, so dass der Kopf 21 der Hammerkopfschraube durch den Schlitz 5 der Ankerschiene 1 hindurchgesteckt werden kann. Anschließend wird der Kopf 21 der Hammerkopfschraube um 90° um die Längsachse des Gewindeschafts 11 der Hammerkopfschraube gedreht, so dass eine Entfernung der Hammerkopfschraube aus der Schiene der Ankerschiene 1 durch eine alleinige Bewegung der Hammerkopfschraube in Richtung weg von den Ankern 2 der Ankerschiene 1 nicht möglich ist. Eine solche Bewegung wird durch das Auftreffen der dem Gewindeschaft der Hammerkopfschraube zugewandten Flächen des Kopfes 21 der Hammerkopfschraube auf die den Ankern 2 der Ankerschiene 1 zugewandten innenseitigen Oberflächen der freien Schenkel 24 gestoppt.

In der beschriebenen Position der Hammerkopfschraube ragt der Gewindeschaft 11 der Hammerkopfschraube aus dem Schlitz 5 der Ankerschiene 1 in Richtung parallel zu den Ankern 2 aus der Ankerschiene 1 hervor. Die Position der Kopfschraube 8 in Längsrichtung 200 der Ankerschiene 1 wird mit Hilfe eines Rastungselements 12 fixiert. Das Rastungselement 12 ist getrennt von einem befestigten Gegenstand 10 ausgebildet und zwischen dem Gegenstand 10 und den Schenkeln 24 der Ankerschiene 1 angeordnet. Das Rastungselement 12 ist als Rastungsplatte ausgebildet. Wie in der Fig. 14 zu erkennen, weist das Rastungselement 12 eine Durchgangsöffnung 15 auf. Der Durchmesser der Durchgangsöffnung 15 entspricht dem Durchmesser des Gewindeschafts 11 der Kopfschraube 8. Der Gewindeschaft 11 der Kopfschraube 8 kann durch die Durchgangsöffnung 15 des Rastungselements 12 gesteckt werden. Das Rastungselement 12 besitzt zwei sich gegenüberliegende Oberflächen, durch die die Durchgangsöffnung 15 führt. Eine der beiden Oberflächen ist eben ausgebildet. Die andere der beiden Oberflächen weist eine Verzahnung 13 (Fig. 13) auf, die mit der Verzahnung 6 der Ankerschiene 1 korrespondiert.

Wie in Fig. 13 gezeigt, wird zur Fixierung der in der Schiene der Ankerschiene 1 befindlichen Kopfschraube 8 der Gewindeschaft 11 der Kopfschraube 8 durch die Durchgangsöffnung 15 des Rastungselements 12 gesteckt. Hierbei wird das Rastungselement 12 so auf den Gewindeschaft 11 der Kopfschraube 8 gebracht, dass die die Verzahnung 13 aufweisende Oberfläche des Rastungselements 12 in Richtung der Anker 2 der Ankerschiene 1 zeigt. Die Zähne der Verzahnungen 13 des Rastungselements 12 und der Verzahnungen 6 der freien Schenkel 24 der Ankerschiene 1 greifen bei der Fixierung der Kopfschraube 8 mit Hilfe des Rastungselements 12 ineinander. Hierbei bildet die unverzahnte, den Ankern 2 abgewandte Oberfläche des Rastungselements 12 eine Ebene mit den Stirnseiten 14 der Seitenwände 3 der Ankerschiene 1. Hierzu überragen die Seitenwände 3 der Ankerschiene 1 die freien Schenkel 24 um die Dicke d. Die Dicke d ist die Dicke der beiden sich gegenüberliegenden Ränder des Rastungselements 12, die beim Positionieren des Rastungselements 12 auf den freien Schenkeln 24 der Ankerschiene 1 in Längsrichtung 200 der Ankerschiene 1 verlaufen. Wie in Fig. 13 gezeigt, schließen diese Seitenränder des Rastungselements 12 bündig mit den Seitenwänden 3 der Ankerschiene 1 ab.

Das Rastungselement 12 ist in diesem Ausführungsbeispiel rechteckig ausgeführt, und der Abstand der sich gegenüberliegenden parallel zueinander verlaufenden Seitenränder des Rastungselements 12 wird als Breite x bezeichnet. Die Breite x des Rastungselements 12 entspricht dem Abstand y der Innenseiten der Seitenwände 3 der Ankerschiene 1. Die Stirnseiten 14 der Seitenwände 3 und das Rastungselement 12 bilden so, wie in der Fig. 13 gezeigt, eine bündige, ebene Fläche. Auf diese Ebene kann ein zu befestigender Gegenstand 10 aufgebracht werden.

Ein zu befestigender Gegenstand 10 weist vorteilhaft eine Öffnung 40 auf, durch die dieser Gewindeschaft 11 gesteckt werden kann oder in die der Gewindeschaft 11 geschraubt werden kann. Die Öffnung 40 des Gegenstands 10 ist in der Fig. 14 zu erkennen. In der Fig. 12 ist der Gewindeschaft 11 der Kopfschraube 8 durch eine solche Öffnung 40 eines befestigten Gegenstands 10 gesteckt und die Kopfschraube 8 mit Hilfe einer Tellerfeder 16 und einer Befestigungsmutter 9 in der Ankerschiene 1 fixiert. Anstatt einer Tellerfeder 16 kann auch eine Unterlegscheibe vorgesehen sein. Zur Fixierung ist die Befestigungsmutter 9 auf den Gewindeschaft 11 der Kopfschraube 8 geschraubt. Beim Festschrauben der Befestigungsmutter 9 werden die dem Gewindeschaft 11 zugewandten Oberflächen des Kopfes 21 der Kopfschraube 8 gegen die den Ankern 2 zugewandten Innenflächen der freien Schenkeln 24 gedrückt. Gleichzeitig wird das Rastungselement 12 gegen die freien Schenkel 24 der Ankerschiene 1 gedrückt. Wie in der Fig. 13 gezeigt, greifen hierbei die Zähne der Verzahnungen 13 des Rastungselements 12 in die Zähne der Verzahnung 6 der freien Schenkel 24 der Ankerschiene 1. So wird die Position der Kopfschraube 8 endgültig in der Ankerschiene 1 festgelegt. Gleichzeitig wird der Gegenstand 10 an der Ankerschiene 1 befestigt. Wie in den Figuren 12 bis 14 zu erkennen, ist das Rastungselement 12 hierbei zwischen dem zu befestigenden Gegenstand 10 und den freien Schenkeln 24 der Ankerschiene 1 angeordnet. Das Rastungselement 12 und die Verzahnungen 13 des Rastungselements 12 sind so an die Winkelstellung der freien Schenkel 24 und an die Verzahnung 6 der freien Schenkel 24 angepasst, dass im befestigten Zustand des Gegenstands 10 die Verzahnung 13 des Rastungselements 12, also der verzahnte Teil der dem Anker 2 der Ankerschiene 1 zugewandten Fläche des Rastungselements 12, mit mindestens 80% ihrer Oberfläche formschlüssig auf den dem Anker 2 abgewandten Seiten der Schenkel 24 der Ankerschiene 1 aufliegt. Im Ausführungsbeispiel ist die Oberfläche der Verzahnung 13 durch die Summe der Flächen aller Flanken der einzelnen Zähne der Verzahnung 13 gebildet.

Die in den Figuren 12 bis 14 dargestellte Ankerschiene 1 kann gemäß jeder der in den vorangehenden Figuren 1 bis 11 dargestellten Ankerschienen 1 ausgebildet sein. Dabei kann es vorgesehen sein, dass die Form des Rastungselements 12 an die Form der Schenkel 4, 24, 34 der Ankerschiene 1 angepasst ist. Insbesondere kann die Form der Verzahnung 13 des Rastungselements 12 an die Form der Verzahnung 6, 46, 56, 66 der freien Schenkel 4, 24, 34 der Ankerschiene angepasst sein. Hierbei kann vorgesehen sein, dass die beiden Bauteile an ihrer Kontaktfläche formschlüssig ineinandergreifen. Es kann aber auch vorgesehen sein, dass die Zähne der Verzahnungen des Rastungselements und die Zähne der Verzahnungen der Schenkel der Ankerschiene lediglich so ausgebildet sind, dass sie unter Bildung von Hohlräumen ineinandergreifen. Weiterhin kann vorgesehen sein, dass die Form des Rastungselements 12 an jede beliebige Winkelstellung der freien Schenkel 4, 24, 34 so angepasst ist, dass das Rastungselement 12 im befestigten Zustand eines Gegenstands 10 formschlüssig auf den Schenkeln 4, 24, 34 der Ankerschiene 1 aufliegt.

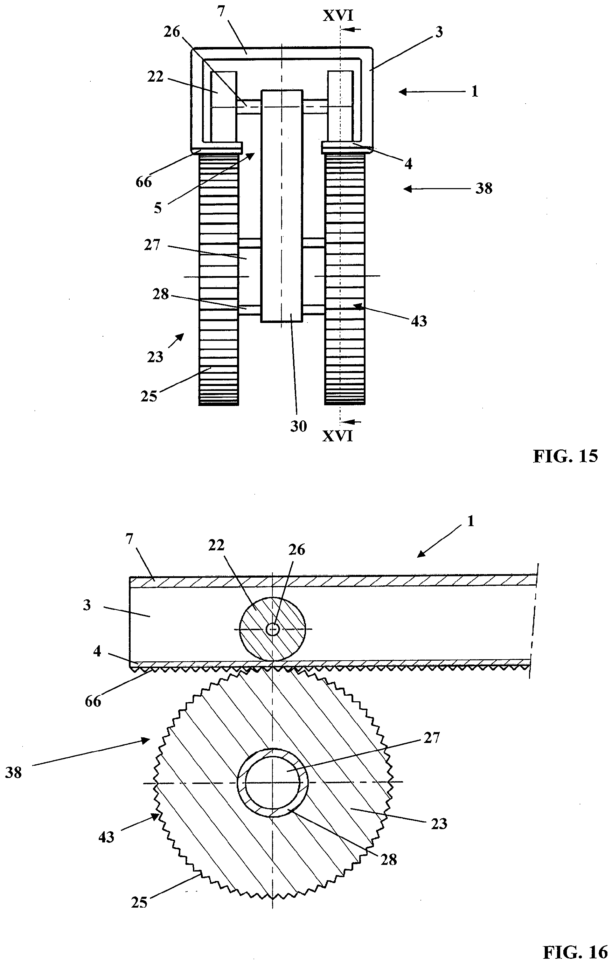

Die Figuren 15 und 16 zeigen eine weitere Möglichkeit, eine erfindungsgemäße Ankerschiene 1 als Teil eines Befestigungssystems zu nutzen. In diesen Figuren ist der zugehörige Anker der Ankerschiene 1 nicht dargestellt. Bei dieser Art von Befestigungssystem wird der zu befestigende Gegenstand an einer verfahrbaren Verfahrvorrichtung 38 befestigt. Die Verfahrvorrichtung 38 umfasst mindestens ein Innenrad 22 und mindestens ein Außenrad 23. Das Außenrad 23 trägt ein Rastungselement 43. Im Ausführungsbeispiel nach der Fig. 15 umfasst die Verfahrvorrichtung 38 zwei Innenräder 22 und zwei Außenräder 23. Die Innenräder 22 sind mittels je einer Achse 26 an einem Achsenträger 30 gelagert und die Außenräder 23 sind mittels je einer Achse 27 an dem Achsenträger 30 gelagert. Die Außenräder 23 sind um die Längsachsen der Achsen 27 drehbar auf den Achsen 27 gelagert. Das zugehörige Lager 28 ist in den Figuren 15 und 16 dargestellt. Die Innenräder 22 sind um die Längsachsen der Achsen 26 drehbar auf den Achsen 26 gelagert. Die Achsen 26 der Innenräder 22 und die Achsen 27 der Außenräder 23 sind über den Achsenträger 30 miteinander verbunden. Die Achsen 26 der Innenräder 22 sind starr im Achsenträger 30 gehalten. Die Achsen 27 der Außenräder 23 sind starr mit dem Achsenträger 30 verbunden. Der Achsenträger 30 ist zwischen den Innenrädern 22 und zwischen den Außenrädern 23 angeordnet. Der Achsenträger 30 ist zwischen den sich gegenüberliegenden freien Schenkeln 4 der Ankerschiene 1 angeordnet. Der Achsenträger 30 ragt zwischen den freien Schenkeln 4 aus dem Schlitz 5 der Ankerschiene 1 aus der Ankerschiene 1 heraus. Der Achsenträger 30 ist orthogonal zum ebenen Boden 7 orientiert.

Die kreisförmigen Außenräder 23 weisen an ihrem Rand eine umlaufende Verzahnung 25 als Teil des Rastungselements 43 auf. Die umlaufende Verzahnung 25 der Außenräder 23 korrespondiert mit der Außenverzahnung der Schenkel 4 der Ankerschiene 1. Im Ausführungsbeispiel nach der Fig. 15 erstreckt sich die Verzahnung 66 der dem Boden 7 und dem nicht gezeigten Anker der Ankerschiene 1 abgewandten Oberflächen der freien Schenkel 4 über die gesamte, dem Boden 7 abgewandte Fläche der Schenkel 4. Die Tiefe der Zähne der Verzahnung 66 ist dabei über die gesamte verzahnte Fläche gleich tief. Es können jedoch auch andere Verzahnungen für die Verwendung einer Ankerschiene in einem Befestigungssystem mit einer Verfahrvorrichtung vorgesehen sein. Prinzipiell kommen dabei alle in den Figuren 1 bis 11 dargestellten Ausführungen von Verzahnungen einer Ankerschiene in Frage. Im Ausführungsbeispiel nach den Figuren 15 und 16 sind die gegenüberliegenden Schenkel 4 der Ankerschiene 1 auf gleicher Höhe an den beiden gegenüberliegend parallel zueinander verlaufenden Seitenwänden 3 angeordnet. Hierbei bilden die Seitenwände 3 und die freien Schenkel 4 Außenkanten der Ankerschiene 1. Die Seitenwände 3 der Ankerschiene 1 sind orthogonal zum Boden 7 der Ankerschiene 1 angeordnet. Die Seitenwände 3 der Ankerschiene 1 und der Boden 7 der Ankerschiene 1 bilden Außenkanten der Ankerschiene 1. Es kann jedoch auch vorgesehen sein, eine beliebige der in den Figuren 1 bis 11 dargestellten Ankerschienen zu verwenden.

In jedem Fall sind die Außenräder 23 der Verfahrvorrichtung 38 so auf der Ankerschiene 1 angeordnet, dass die Verzahnung 25 der Außenräder in die Verzahnung 6, 46, 56, 66 der Schenkel 4, 24, 34 der Ankerschiene 1 eingreift. Bei dem Ausführungsbeispiel nach der Fig. 15 greift die Verzahnung 25 der Außenräder 23 in die Verzahnung 66 der freien Schenkel 4 der Ankerschiene 1 ein. Die Außenräder 23 werden über den Achsenträger 30 und die Innenräder 22 gegen die dem Boden 7 und dem nicht gezeigten Anker abgewandten Außenseiten der freien Schenkel 4 gedrückt. Hierzu drücken die Innenräder 22 gegen die dem Boden 7 und dem nicht gezeigten Anker zugewandten Innenseiten der freien Schenkel 4. Wie die Figuren 15 und 16 zeigen, liegen die Achsen 26 der Innenräder 22 und die Achsen 27 der Außenräder 23 in einer gemeinsamen Ebene. Die beiden Achsen 26 der Innenräder 22 sind orthogonal zum Achsenträger 30 auf gleicher Höhe des Achsenträgers 30 ausgerichtet. Die Achsen 27 der Außenräder 23 sind orthogonal zum Achsenträger 30 auf gleicher Höhe des Achsenträgers 30 angeordnet. Der senkrechte Abstand der Achsen 26 zu den Achsen 27, die Radien der Innenräder 22, die Radien der Außenräder 23 und die Verzahnung 25 der Außenräder 23 sind so aufeinander abgestimmt, dass die freien Schenkel 4 gerade zwischen den Innenrädern 22 und den Außenrädern 23 Platz finden, dass die Verzahnung 25 der Außenräder 23 in die Verzahnung 66 der Schenkel 4 eingreift, und dass die Außenräder 23 leicht gegen die freien Schenkel 4 gedrückt werden.

Bei einem Verfahren der Verfahrvorrichtung 38 drehen sich sowohl die Außenräder 23 als auch die Innenräder 22. Wie Fig. 16 zeigt, rollen dabei die an den Umfangsseiten der Außenräder 23 angeordneten Verzahnungen 25 des Rastungselements 43 der Außenräder 23 auf den Verzahnungen 66 der Schenkel 4 der Ankerschiene 1 ab. So ist eine Bewegung der Verfahrvorrichtung 38 in Längsrichtung 200 der Ankerschiene 1 möglich.

Durch Arretieren des Lagers 28 des Außenrads 23 und der zugeordneten Achse 27 wird eine Drehung des Außenrads 23 um die Längsachse der Achse 27 des Außenrads 23 verhindert. Dann ist keine Bewegung der Verfahrvorrichtung 38 mehr möglich, und die Position der Verfahrvorrichtung 38 in Längsrichtung der Ankerschiene 1 ist fixiert. Mit dem Befestigungssystem, bestehend aus einer Ankerschiene 1 und einer Verfahrvorrichtung 38, ist somit die Möglichkeit gegeben, einen Gegenstand gleichzeitig verfahrbar und fixierbar an einer Ankerschiene 1 zu befestigen. Hierzu kann der zu befestigende Gegenstand beispielsweise an dem Achsenträger 30 befestigt werden. Es kann auch vorgesehen sein, die Verfahrvorrichtung 38 mittels eines Motors zu verfahren. Hierzu kann beispielsweise vorgesehen sein, dass die Außenräder 23 über einen Motor angetrieben werden.

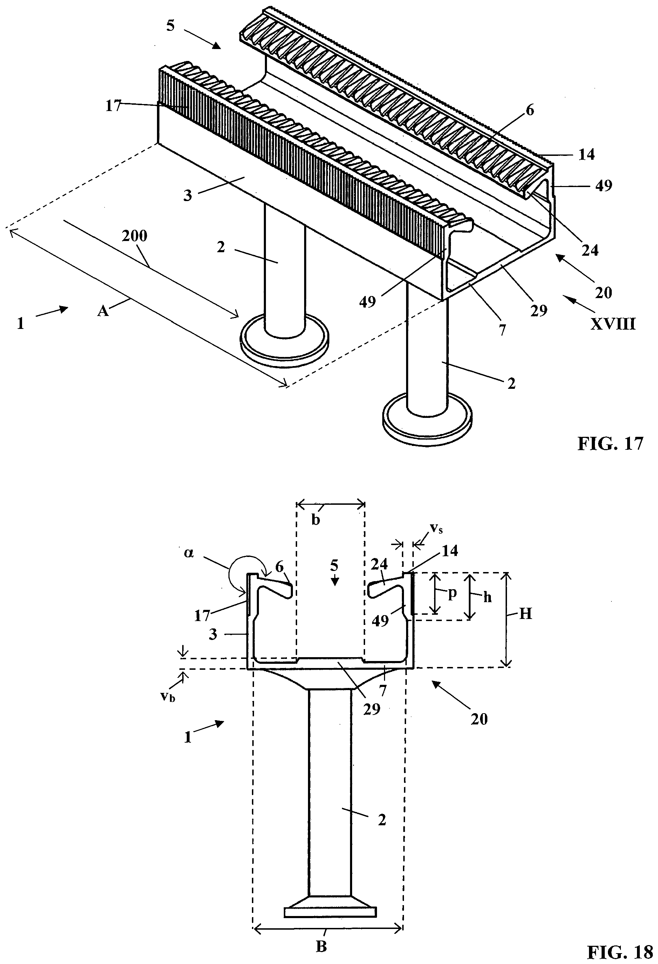

Die Fig. 17 zeigt die perspektivische Darstellung einer Ankerschiene 1. Zur Verankerung der Ankerschiene 1 im Beton sind Anker 2 vorgesehen. Die Anker 2 sind orthogonal zu einem ebenen Boden 7 angeordnet. Die Anker 2 sind bezogen auf die Richtung quer zur Längsrichtung 200 der Ankerschiene 1 in der Mitte des Bodens 7 angeordnet. Orthogonal zum Boden 7 der Ankerschiene 1 sind Seitenwände 3 angeordnet. Die zwei Seitenwände 3 verlaufen parallel zueinander. Die Seitenwände 3 bilden gemeinsam mit dem Boden 7 Außenkanten des Grundkörpers 20 der Ankerschiene 1. An dem dem Boden 7 abgewandten Bereich der Seitenwände 3 sind auf gleicher Höhe freie Schenkel 24 angeordnet. Die Seitenwände 3 überragen die freien Schenkel 24. Der den Ankern abgewandte Bereich der Seitenwände 3 wird bei beiden Seitenwänden 3 auf gleicher Höhe durch die Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einem Querschnitt quer zur Längsrichtung 200 der Ankerschiene 1 zeigen die beiden Schenkel 24 ein hakenförmiges Profil. Die Wandstärke der Schenkel 24 nimmt von den Seitenwänden 3 der Ankerschiene 1 zum Schlitz 5 der Ankerschiene 1 hin zu.. Die den Ankern 2 abgewandten Oberflächen der freien Schenkel 24 sind mit einer Verzahnung 6 versehen. Die Verzahnung 6 der freien Schenkel 24 ist quer zur Längsrichtung 200 der Ankerschiene 1 orientiert. Die den Ankern 2 abgewandte Seite der Schenkel 24 wird auch als vordere Außenseite der Ankerschiene 1 bezeichnet. Bezogen auf die Längserstreckung 200 der Ankerschiene 1 besitzen die freien Schenkel 24 an der vorderen Außenseite der Ankerschiene 1 eine durchgehende Verzahnung 6, die sich über die gesamte Längserstreckung A der Ankerschiene 1 erstreckt. Die Verzahnung 6 der Außenseiten der Schenkel 24 erstreckt sich vom Schlitz 5 der Ankerschiene 1 bis etwa zu den Ebenen, in denen auch die Innenwände der Seitenwände 3 liegen.

Fig. 18 zeigt eine Ansicht der Ankerschiene 1 aus Fig. 17 in Richtung des Pfeils XVIII in Fig. 17 und entgegen der in Fig. 17 eingezeichneten Längsrichtung 200 der Ankerschiene 1 von einem Längsende der Ankerschiene 1 aus. Wie in der Fig. 18 zu erkennen, bilden die den Ankern 2 abgewandten Oberflächen der freien Schenkel 24 mit den Außenseiten der Seitenwände 3 einen Winkel a, der an der Außenseite der Ankerschiene 1 gemessen und größer als 270° ist. Wie in den Figuren 17 und 18 zu erkennen, weist der Grundkörper 20 der Ankerschiene 1 am Boden 7 eine Bodenverdickung 29 auf. An der verdickten Stelle ist der Boden 7 ungefähr um die Hälfte dicker als an unverdickten Stellen. Die in Fig. 18 gezeigte Wandstärke v_{b} der Bodenverdickung 29 beträgt ungefähr das 1,5fache der normalen, unverdickten Wandstärke des Grundkörpers 20 der Ankerschiene 1. Die Bodenverdickung 29 ist an der den Ankern 2 abgewandten Seite des Bodens 7 angeordnet. Der Boden 7 besitzt eine in Fig. 18 gekennzeichnete Breite B, die dem Abstand der sich parallel gegenüberliegenden Seitenwände 3 im Übergangsbereich zwischen Boden 7 und Seitenwänden 3 entspricht. Quer zur Längsrichtung 200 der Ankerschiene 1 und des Bodens 7 erstreckt sich die Bodenverdickung 29 über eine Teilbreite b der gesamten Breite B des Bodens 7. Die Teilbreite b ist ungefähr halb so groß wie die gesamte Breite B des Bodens 7. Die Bodenverdickung 29 ist in der Mitte zwischen den sich parallel gegenüberliegenden Seitenwänden 3 und bezogen auf die Richtung quer zur Längsrichtung 200 der Ankerschiene 1 in der Mitte des Bodens 7 angeordnet. Wie Fig. 17 verdeutlicht, erstreckt sich die Bodenverdickung 29 über die gesamte Längsausdehnung A des Bodens 7.

Die Figuren 17 und 18 zeigen, dass der Grundkörper 20 der Ankerschiene 1 an den Seitenwänden 3 Seitenwandverdickungen 49 aufweist. Die Wandstärke vₛ der Seitenwandverdickung 49 entspricht der Wandstärke v_{b} der Bodenverdickung 29 und beträgt daher wiederum ungefähr das 1,5fache der Wandstärke des Grundkörpers 20 in unverdickten Bereichen. Wie in Fig. 18 dargestellt, besitzen die Seitenwände 3 eine Gesamthöhe H. Die Gesamthöhe H der Seitenwände 3 ist über den Abstand der den Ankern 2 abgewandten Stirnseite 14 einer Seitenwand 3 zu der den Ankern 2 zugewandten Seite des Bodens 7 definiert. Die Seitenwandverdickung 49 erstreckt sich über einen Teil dieser Gesamthöhe H einer Seitenwand 3. Die Seitenwandverdickung 49 erstreckt sich ausgehend von der Stirnseite 14 einer Seitenwand 3 hin zum Boden 7 der Ankerschiene 1 über eine Teilhöhe h der Seitenwand 3. Die Teilhöhe h der Seitenwand 3 entspricht ungefähr der Hälfte der Gesamthöhe H der Seitenwand 3. Wie Fig. 17 zeigt, erstreckt sich die Seitenwandverdickung 49 über die gesamte Längsausdehnung A einer Seitenwand 3. Die Seitenwandverdickung 49 ist auf der Innenseite der Seitenwand 3 angeordnet. Die Innenseite einer Seitenwand 3 ist der parallel gegenüberliegenden anderen Seitenwand 3 zugewandt.

An den Außenseiten der Seitenwände 3 ist eine Profilierung als Seitenwandprofilierung 17 angeordnet. Die Seitenwandprofilierung 17 erstreckt sich über die in Fig. 18 gezeigte Teilhöhe p der Gesamthöhe H einer Seitenwand 3. Die Teilhöhe p beträgt etwas weniger als die Hälfte der Gesamthöhe H der Seitenwand 3 und damit etwas weniger als die Teilhöhe h, über die sich die Seitenwandverdickung 49 erstreckt.

In Richtung der Längsrichtung 200 der Ankerschiene 1 erstreckt sich die Seitenwandprofilierung 17 über die gesamte Länge A der Längserstreckung der Ankerschiene 1. Die Seitenwandprofilierung 17 besteht aus parallel zueinander angeordneten Rillen, die in die Oberfläche der Seitenwände 3 eingebracht sind. Wie in Fig. 18 zu erkennen, sind die Seitenwände 3 im Bereich der Seitenwandprofilierungen 17 mit den Seitenwandverdickungen 49 verdickt. Die Wandstärke vₛ der Seitenwände 3 beträgt im Bereich der Seitenwandverdickung 49 ungefähr das l,5fache der Wandstärke des Grundkörpers 20 in unverdickten Bereichen. Die Tiefe der zur Profilierung in die Seitenwände 3 eingebrachten Rillen der Seitenwandprofilierung 17 beträgt ungefähr ein Viertel der Wandstärke vₛ des Grundkörpers 20 in den durch die Seitenwandverdickungen 49 verdickten Bereichen. Die Seitenwandprofilierung 17 steht nicht über die ebene Oberfläche der Seitenwand 3 hervor.

In Fig. 18 ist zu erkennen, dass die Verzahnung 6 der Schenkel 24 in dem dem Schlitz 5 benachbarten Bereich der Schenkel 24 tiefer ist als im weiter vom Schlitz 5 entfernten Bereich der Schenkel 24. Die Länge des Ankers 2 in seiner Längsrichtung beträgt mehr als doppelt so viel wie die Höhe H der Seitenwände 3. Die Höhe H der Seitenwände 3 erstreckt sich in Längsrichtung des Ankers 2. Der Abstand der beiden parallel zueinander verlaufenden Seitenwände 3 beträgt im Bereich des Übergangs zwischen Boden 7 und Seitenwänden 3 in etwa doppelt so viel wie die Breite des Schlitzes 5 und entspricht der Breite B des Bodens 7. Die Breite des Schlitzes 5 ist hierbei der kleinste Abstand der beiden gegenüberliegenden Schenkel 24.

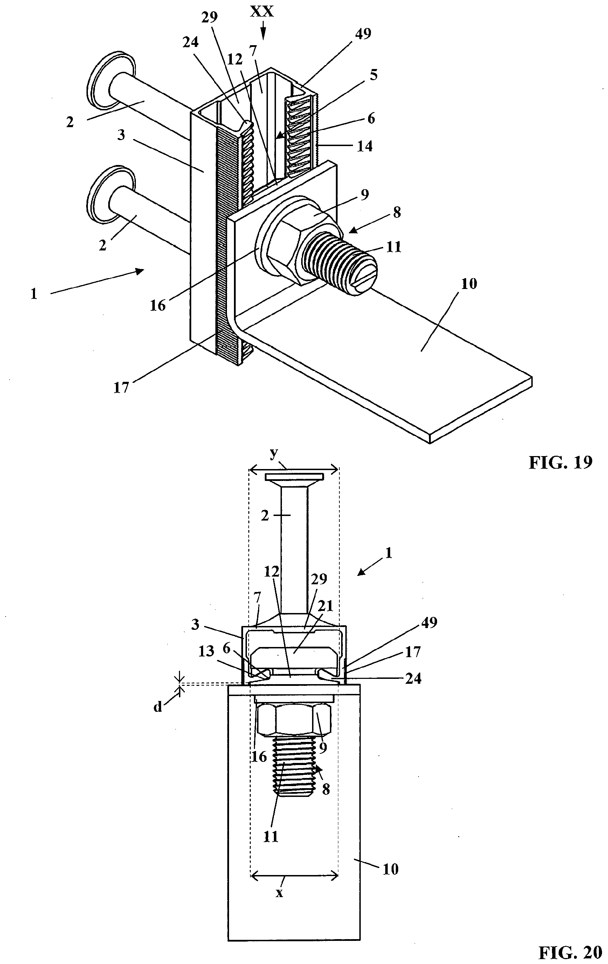

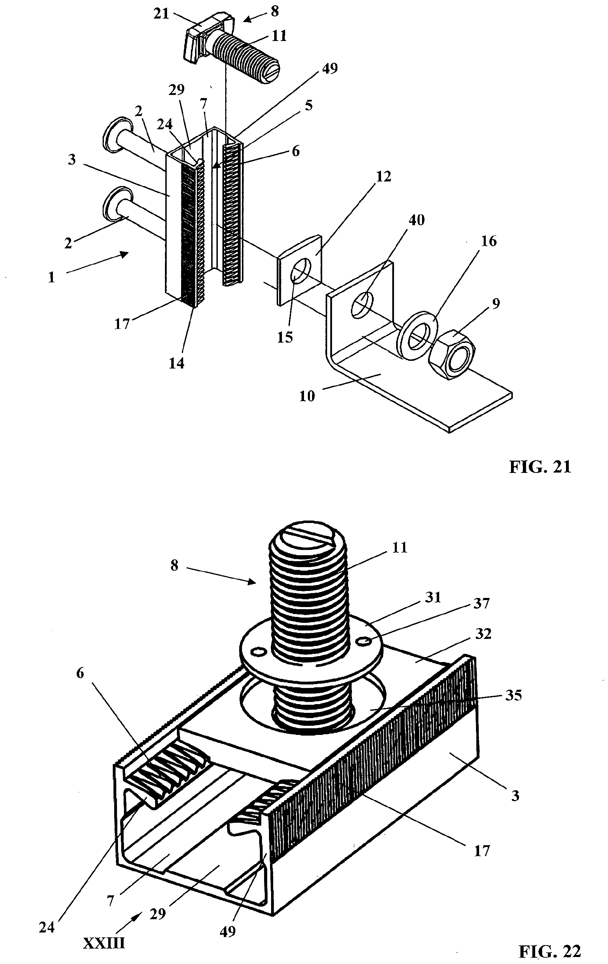

Die Fig. 19 zeigt die perspektivische Darstellung eines Befestigungssystems zur Sicherung einer Kopfschraube 8 innerhalb einer im Beton zu befestigenden Ankerschiene 1. Die Fig. 20 zeigt eine Ansicht des Befestigungssystems aus der Fig. 19 in Richtung des Pfeils XX in Fig. 19, also in Längsrichtung der Ankerschiene 1 des Befestigungssystems. Die Fig. 21 zeigt eine Explosionsdarstellung des in den Figuren 19 und 20 gezeigten Befestigungssystems. Die Ankerschiene 1 entspricht in den Figuren 19, 20 und 21 der in der Fig. 17 dargestellten Ankerschiene. Mit Hilfe der Kopfschraube 8 ist ein Gegenstand 10 an der Ankerschiene 1 befestigt. Die Kopfschraube 8 umfasst einen Kopf 21, mit dem sie in der Ankerschiene 1 gehalten wird. Hierbei hintergreift der Kopf 21 der Kopfschraube 8 die Schenkel 24 der Ankerschiene 1. Typischerweise ist die Kopfschraube 8 eine Hammerkopfschraube. Zur Einbringung des Kopfes 21 der Hammerkopfschraube wird die Längsrichtung des Hammerkopfes parallel zur Längsrichtung 200 der Ankerschiene 1 ausgerichtet, so dass der Kopf 21 der Hammerkopfschraube durch den Schlitz 5 der Ankerschiene 1 hindurchgesteckt werden kann. Anschließend wird der Kopf 21 der Hammerkopfschraube um 90° um die Längsachse des Gewindeschafts 11 der Hammerkopfschraube gedreht, so dass eine Entfernung der Hammerkopfschraube aus der Schiene der Ankerschiene 1 durch eine alleinige Bewegung der Hammerkopfschraube in Richtung weg von den Ankern 2 der Ankerschiene 1 nicht möglich ist. Eine solche Bewegung wird durch das Auftreffen der dem Gewindeschaft der Hammerkopfschraube zugewandten Flächen des Kopfes 21 der Hammerkopfschraube auf die den Ankern 2 der Ankerschiene 1 zugewandten innenseitigen Oberflächen der freien Schenkel 24 gestoppt.

In der beschriebenen Position der Hammerkopfschraube ragt der Gewindeschaft 11 der Hammerkopfschraube aus dem Schlitz 5 der Ankerschiene 1 in Richtung parallel zu den Ankern 2 aus der Ankerschiene 1 hervor. Die Position der Kopfschraube 8 in Längsrichtung 200 der Ankerschiene 1 wird mit Hilfe eines Rastungselements 12 fixiert. Das Rastungselement 12 ist getrennt von einem an der Ankerschiene 1 befestigten Gegenstand 10 ausgebildet und zwischen dem befestigten Gegenstand 10 und der den Ankern 2 abgewandten Außenseite der Schenkel 24 der Ankerschiene 1 angeordnet. Wie in der Fig. 21 zu erkennen, weist das Rastungselement 12 eine Durchgangsöffnung 15 auf. Der Durchmesser der Durchgangsöffnung 15 entspricht dem Durchmesser des Gewindeschafts 11 der Kopfschraube 8. Der Gewindeschaft 11 der Kopfschraube 8 kann durch die Durchgangsöffnung 15 des Rastungselements 12 gesteckt werden. Das Rastungselement 12 besitzt zwei sich gegenüberliegende Oberflächen, durch die die Durchgangsöffnung 15 führt. Eine der beiden Oberflächen ist eben ausgebildet. Die andere der beiden Oberflächen weist eine Verzahnung 13 (Fig. 20) auf, die mit der Verzahnung 6 der Ankerschiene 1 korrespondiert.

Wie in der Fig. 20 gezeigt, wird zur Fixierung der in der Schiene der Ankerschiene 1 befindlichen Kopfschraube 8 der Gewindeschaft 11 der Kopfschraube 8 durch die Durchgangsöffnung 15 des Rastungselements 12 gesteckt. Hierbei wird das Rastungselement 12 so auf den Gewindeschaft 11 der Kopfschraube 8 gebracht, dass die die Verzahnung 13 aufweisende Oberfläche des Rastungselements 12 in Richtung der Anker 2 der Ankerschiene 1 zeigt. Die Zähne der Verzahnungen 13 des Rastungselements 12 und der Verzahnungen 6 der freien Schenkel 24 der Ankerschiene 1 greifen im befestigten Zustand des Gegenstands 10 ineinander. Hierbei bildet die unverzahnte, den Ankern 2 abgewandte Oberfläche des Rastungselements 12 eine Ebene mit den Stirnseiten 14 der Seitenwände 3 der Ankerschiene 1. Hierzu überragen die Seitenwände 3 der Ankerschiene 1 die freien Schenkel 24 um die Dicke d. Die Dicke d ist die Dicke der beiden sich gegenüberliegenden Ränder des Rastungselements 12, die im befestigten Zustand des Gegenstands 10 und des Rastungselements 12 in Längsrichtung 200 der Ankerschiene 1 verlaufen. Wie in Fig. 13 gezeigt, schließen diese Seitenränder des Rastungselements 12 bündig mit den Seitenwänden 3 der Ankerschiene 1 ab.

Das Rastungselement 12 ist in diesem Ausführungsbeispiel getrennt vom Gegenstand 10 und rechteckig ausgeführt, und der Abstand der sich gegenüberliegenden parallel zueinander verlaufenden Seitenränder des Rastungselements 12 wird als Breite x bezeichnet. Die Breite x des Rastungselements 12 entspricht dem Abstand y der Innenseiten der Seitenwände 3 der Ankerschiene 1 auf Höhe der an den Seitenwänden 3 angeordneten Schenkel 24. Die Stirnseiten 14 der Seitenwände 3 und das Rastungselement 12 bilden so, wie in der Fig. 20 gezeigt, eine bündige, ebene Fläche. Auf diese Ebene kann ein zu befestigender Gegenstand 10 aufgebracht werden.

Ein zu befestigender Gegenstand 10 muss eine Öffnung 40 aufweisen, durch die dieser Gewindeschaft 11 gesteckt werden kann oder in die der Gewindeschaft 11 geschraubt werden kann. In der Fig. 21 ist eine solche Öffnung 40 des Gegenstands 10 zu erkennen. In der Fig. 19 ist der Gewindeschaft 11 der Kopfschraube 8 durch ein solche Öffnung 40 eines befestigten Gegenstands 10 gesteckt und die Kopfschraube 8 mit Hilfe einer Tellerfeder 16 und einer Befestigungsmutter 9 in der Ankerschiene 1 fixiert. Hierzu ist die Befestigungsmutter 9 auf den Gewindeschaft 11 der Kopfschraube 8 geschraubt. Beim Festschrauben der Befestigungsmutter 9 werden die dem Gewindeschaft 11 zugewandten Oberflächen des Kopfes 21 der Kopfschraube 8 gegen die den Ankern 2 zugewandten Innenflächen der freien Schenkeln 24 gedrückt. Gleichzeitig wird das Rastungselement 12 gegen die freien Schenkel 24 der Ankerschiene 1 gedrückt. Wie in der Fig. 20 gezeigt, greifen hierbei die Zähne der Verzahnungen 13 des Rastungselements 12 in die Zähne der Verzahnung 6 der freien Schenkel 24 der Ankerschiene 1. So wird die Position der Kopfschraube 8 endgültig in der Ankerschiene 1 festgelegt. Gleichzeitig wird der Gegenstand 10 an der Ankerschiene 1 befestigt. Wie in den Figuren 19 bis 21 zu erkennen, ist das Rastungselement 12 hierbei zwischen dem zu befestigenden Gegenstand 10 und den freien Schenkeln 24 der Ankerschiene 1 angeordnet. Das Rastungselement 12 und die Verzahnungen 13 des Rastungselements 12 sind so an die Winkelstellung der freien Schenkel 24 und an die Verzahnung 6 der freien Schenkel 24 angepasst, dass im befestigten Zustand des Gegenstands 10 die Verzahnung des Rastungselements 12 mit mindestens 80% ihrer Oberfläche formschlüssig auf den Schenkeln 24 der Ankerschiene 1 aufliegt.

Die in den Figuren 19 bis 21 dargestellte Ankerschiene 1 kann gemäß jeder der in den vorangehenden Figuren 1 bis 11 dargestellten Ankerschienen ausgebildet sein. Dabei kann es vorgesehen sein, dass die Form des Rastungselements 12 an die Form der Schenkel 4, 24, 34 der Ankerschiene 1 angepasst ist. Insbesondere kann die Form der Verzahnung 13 des Rastungselements 12 an die Form der Verzahnung 6, 46, 56, 66 der freien Schenkel 4, 24, 34 der Ankerschiene angepasst sein. Hierbei kann vorgesehen sein, dass die beiden Bauteile an ihrer Kontaktfläche formschlüssig ineinandergreifen. Es kann aber auch vorgesehen sein, dass die Zähne der Verzahnungen des Rastungselements und die Zähne der Verzahnungen der Schenkel der Ankerschiene lediglich so ausgebildet sind, dass sie unter Bildung von Hohlräumen ineinandergreifen. Weiterhin kann vorgesehen sein, dass die Form des Rastungselements 12 an jede beliebige Winkelstellung der freien Schenkel 4, 24, 34 so angepasst ist, dass das Rastungselement 12 im befestigten Zustand eines Gegenstands 10 formschlüssig auf den Schenkeln 4, 24, 34 der Ankerschiene 1 aufliegt.

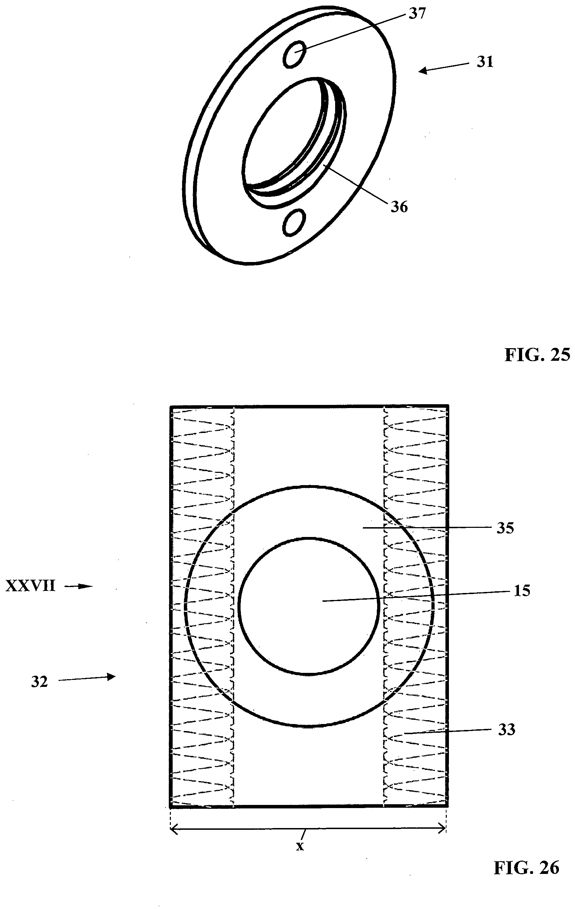

Die Fig. 22 zeigt die perspektivische Darstellung eines erfindungsgemäßen Befestigungssystems. Das Befestigungssystem gemäß der Fig. 22 umfasst ein getrennt von einem zu befestigenden Gegenstand ausgebildetes Rastungselement 32. Das Rastungselement 32 ist als Rastungsplatte mit einer Aussparung 35 für einen Rastungsplatteneinsatz 31 ausgebildet. Wie in der Fig. 25 gezeigt, besitzt der Rastungsplatteneinsatz 31 ein Innengewinde 36 und Montagelöcher 37.

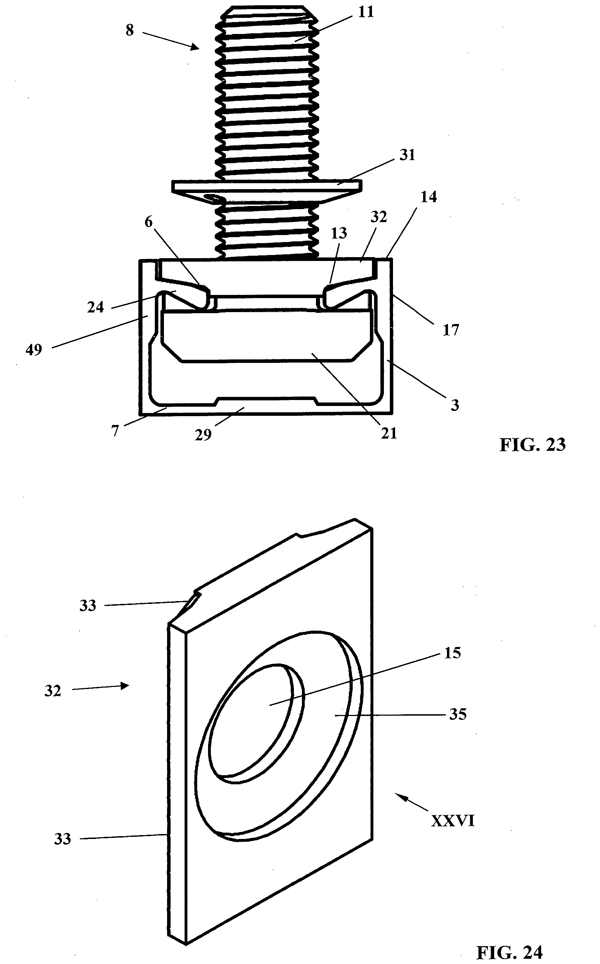

Die Funktion des Rastungselements 32 ist in der Fig. 22 dargestellt. Sie besteht darin, eine Vormontage der Kopfschraube 8 und des getrennt von einem zu befestigenden Gegenstand ausgebildeten Rastungselements 32 an der Ankerschiene 1 zu ermöglichen. Hierzu wird zunächst der Kopf 21 (Fig. 23) der Kopfschraube 8 in den Schlitz 5 der Ankerschiene 1 eingeführt und der Kopf 21 der Kopfschraube 8 in bekannter Weise gedreht. Anschließend wird der Gewindeschaft 11 der Kopfschraube 8 durch die Durchgangsöffnung des Rastungselements 32 gesteckt. Dabei greift die Verzahnung 13 (Fig. 23) des Rastungselements 32 in die Verzahnung 6 der Schenkel 24 der Ankerschiene 1 ein. Der Gewindeschaft 11 der Kopfschraube 8 ragt aus dem Schlitz 5 der Ankerschiene 1 und der Durchgangsöffnung des Rastungselements 32 heraus. Auf den so herausragenden Gewindeschaft 11 der Kopfschraube 8 wird der Rastungsplatteneinsatz 31 aufgeschraubt. Hierzu kann in die Montagelöcher 37 des Rastungsplatteneinsatzes 31 ein Werkzeug eingebracht werden. Der Einsatz des Werkzeugs erleichtert das Drehen des Rastungsplatteneinsatzes 31 zum Aufschrauben des Rastungsplatteneinsatzes 31 auf den Gewindeschaft 11 der Kopfschraube 8. Das Rastungselement 32 weist eine Aussparung 35 auf, in die der Rastungsplatteneinsatz 31 bündig passt.

Zur Vormontage der Kopfschraube 8 und des Rastungselements 32 in der Ankerschiene 1 wird der Rastungsplatteneinsatz 31 so weit auf den Gewindeschaft 11 der Kopfschraube 8 aufgeschraubt, dass er bündig in der Aussparung 35 des getrennt von einem zu befestigenden Gegenstand ausgebildeten Rastungselements 32 zu liegen kommt. Dabei wird der Kopf der Kopfschraube 8 gegen die dem Boden 7 zugewandten Innenseiten der Schenkel 24 gedrückt. Gleichzeitig greift die Verzahnung 13 (Fig. 23) des Rastungselements 32 in die Verzahnung 6 der dem Boden 7 abgewandten Außenseiten der Schenkel 24 der Ankerschiene 1. Auf diese Weise wird die Position der Kopfschraube 8 in der Ankerschiene 1 festgelegt. Gleichzeitig wird die Position des Rastungselements 32 in der Ankerschiene 1 festgelegt. So kann eine Vormontage des Rastungselements 32 und der Kopfschraube 8 stattfinden. Ein zu befestigender Gegenstand kann später auf den Gewindeschaft 11 der Kopfschraube 8 aufgesetzt werden. Die Vormontage mit dem Rastungsplatteneinsatz 31 erleichtert die Montage der Kopfschraube 8 und des Rastungselements 32 auf der Baustelle. Die Position der Kopfschraube 8 kann auch schon ohne zu befestigenden Gegenstand in der Ankerschiene 1 fixiert werden. Dies ist insbesondere von Vorteil, wenn der zu befestigende Gegenstand sehr schwer ist, da nicht zusätzlich zum Gegenstand die Kopfschraube 8 und das Rastungselement 32 in ihrer Position gehalten werden müssen. So kann der Arbeiter sich bei Befestigen des Gegenstands allein auf die Befestigungsmutter 9 und den zu befestigenden Gegenstand 10 konzentrieren.

Fig. 23 zeigt eine Ansicht des Befestigungssystems aus Fig. 22 in Richtung des in Fig. 22 mit XXIII gekennzeichneten Pfeils und in Längsrichtung der Ankerschiene 1 des Befestigungssystems. In dieser Darstellung ist verdeutlicht, dass der Kopf 21 der Kopfschraube 8 beim Aufschrauben des Rastungsplatteneinsatzes 31 auf den Gewindeschaft 11 der Kopfschraube 8 gegen die Schenkel 24 der Ankerschiene 1 gedrückt wird.

Fig. 24 zeigt eine perspektivische Darstellung des Rastungselements 32 mit einer Aussparung 35 für einen Rastungsplatteneinsatz 31 aus den Figuren 22 und 23. Das Rastungselement 32 weist in seiner Mitte eine Durchgangsöffnung 15 auf, durch die der Gewindeschaft 11 einer Kopfschraube 8 geführt werden kann. Auf der der Aussparung 35 gegenüberliegenden Seite des Rastungselements 32 ist eine Verzahnung 33 des Rastungselements 32 angeordnet. Wie in den Figuren 24 und 26 zu erkennen, erstreckt sich die Verzahnung 33 des Rastungselements 32 bis zum Rand des Rastungselements 32.

Fig. 26 zeigt eine Draufsicht auf die Oberfläche des Rastungselements 32 aus Fig. 24 aus der in Fig. 24 mit XXVI gekennzeichneten Richtung und somit senkrecht auf die ebene Oberfläche des Rastungselements 32, die bei Verwendung als Teil des Befestigungssystems den Ankern abgewandt ist. Das Rastungselement 32 ist mit einer Aussparung 35 für den Rastungsplatteneinsatz 31 versehen. Die auf der gegenüberliegenden Seite angeordneten Verzahnungen 33 des Rastungselements 32 sind mit gestrichelten Linien angedeutet. Die Verzahnungen 33 sind in dieser Draufsicht auf das Rastungselement 32 in Wirklichkeit nicht zu sehen. Die Fig. 26 zeigt weiterhin die kreisförmige Durchgangsöffnung 15 im Zentrum des Rastungselements 32 und die ebenfalls kreisförmige, um die Durchgangsöffnung 15 angeordnete Aussparung 35 in der Oberfläche des Rastungselements 32.

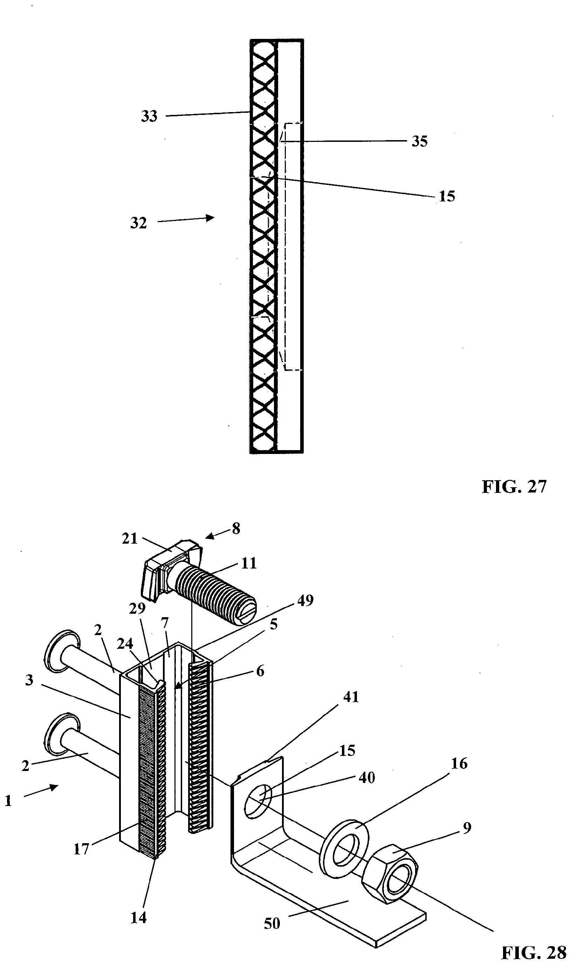

Die Fig. 27 zeigt eine Ansicht des Rastungselements 32 aus den Figuren 24 und 26 in Richtung des in Fig. 26 mit XXVII gekennzeichneten Pfeils, also eine Draufsicht senkrecht auf eine der beiden schmalen Stirnseiten des Rastungselements 32. In dieser Darstellung ist die Verzahnung 33 des Rastungselements 32 an seiner Oberfläche sehr gut zu erkennen. Die in Wirklichkeit nicht zu sehende Aussparung 35 und die ebenfalls in Wirklichkeit nicht zu sehende Durchgangsöffnung 15 sind durch gestrichelte Linien angedeutet. Die in den Figuren 12, 13, 14, 19, 20 und 21 dargestellten Rastungselemente 12 weisen entsprechende Verzahnungen wie das in den Figuren 23, 24, 26 und 27 dargestellte Rastungselement 32 auf.

Die Fig. 28 zeigt die Explosionsdarstellung eines Befestigungssystems, das zu dem Befestigungssystem aus der Fig. 21 vergleichbar ist. Sich entsprechende Teile sind, wie in der gesamten Beschreibung, mit gleichen Bezugszeichen bezeichnet. Der wesentliche Unterschied der Befestigungssysteme nach den Figuren 21 und 28 liegt darin, dass im Befestigungssystem nach der Fig. 28 das Rastungselement einteilig mit dem zu befestigenden Gegenstand ausgebildet ist. Wie Fig. 28 zeigt, besitzt ein zu befestigender Gegenstand 50 ein Rastungselement 41. Zur Durchführung der Kopfschraube 8 durch das Rastungselement 41 ist eine Durchgangsöffnung 15 im Rastungselement 41 vorgesehen. Die Durchgangsöffnung 15 des Rastungselements 41 fällt mit der Öffnung 40 des Gegenstands 50 zur Durchführung der Kopfschraube 8 zusammen.

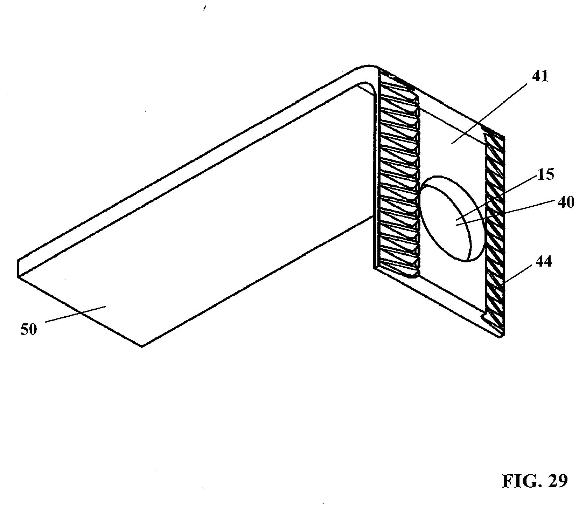

Die Fig. 29 zeigt den Gegenstand 50 aus der Fig. 28 in einer perspektivischen Darstellung. Hier ist gut zu erkennen, dass der zu befestigende Gegenstand 50 an seiner im befestigten Zustand des Gegenstands 50 dem Anker 2 des Befestigungssystems aus der Fig. 28 zugewandten Seite das Rastungselement 41 aufweist. Das Rastungselement 41 weist eine Verzahnung 44 auf, die mit der Verzahnung 6 der Schenkel 24 der Ankerschiene 1 aus der Fig. 28 korrespondiert.

## Patentansprüche

1. Ankerschiene zur Verankerung im Beton mit einem im Wesentlichen C-förmigen Querschnitt, wobei die Ankerschiene (1) mindestens einen Anker (2), zwei Seitenwände (3) und zwei gegenüberliegende freie Schenkel (4, 24, 34) umfasst, wobei zwischen den freien Schenkeln (4, 24, 34) ein Schlitz (5) in Längsrichtung (200) der Ankerschiene (1) gebildet ist, wobei die freien Schenkel (4, 24, 34) an ihrer dem Anker (2) abgewandten Seite, und somit auf der vorderen Außenseite der Ankerschiene (1) bezogen auf die Längsrichtung (200) eine zumindest partielle Verzahnung (6, 46, 56, 66) besitzen,
**dadurch gekennzeichnet, dass** ein dem mindestens einen Anker (7) abgewandter Bereich der zwei Seitenwände (3) auf gleicher Höhe durch Stirnseiten (14) der Seitenwände (3) begrenzt ist, und dass die Stirnseiten (14) der Seitenwände (3) die freien Schenkel (4, 24, 34) überragen.

2. Ankerschiene nach Anspruch 1,
**dadurch gekennzeichnet, dass** die Schenkel (4, 24, 34) an ihrer dem Anker (2) abgewandten Seite, und somit auf der vorderen Außenseite der Ankerschiene (1) bezogen auf die Längsrichtung (200) eine durchgehende Verzahnung (6, 46, 56, 66) besitzen.

3. Ankerschiene nach Anspruch 1 oder 2,
**dadurch gekennzeichnet, dass** die Verzahnung (6, 46, 56, 66) der Schenkel (4, 24, 34) quer zur Längsrichtung (200) der Ankerschiene (1) orientiert ist.

4. Ankerschiene nach einem der Ansprüche 1 bis 3,
**dadurch gekennzeichnet, dass** die Verzahnung (6, 56) der Schenkel (4, 24, 34) in dem dem Schlitz (5) benachbarten Bereich der Schenkel (4, 24, 34) tiefer ist als im weiter vom Schlitz (5) entfernten Bereich der Schenkel (4, 24, 34).

5. Ankerschiene nach einem der Ansprüche 1 bis 4,
**dadurch gekennzeichnet, dass** die Wandstärke der Schenkel (24) von den Seitenwänden (3) der Ankerschiene (1) zum Schlitz (5) der Ankerschiene (1) hin zunimmt.

6. Ankerschiene nach einem der Ansprüche 1 bis 5,
**dadurch gekennzeichnet, dass** die Schenkel (4, 24) der Ankerschiene (1) und zumindest der an die Schenkel (4, 24) angrenzende Teil der Seitenwände (3) der Ankerschiene (1) orthogonal zueinander orientiert sind, und dass die dem Anker (2) abgewandten Oberflächen der Schenkel (4, 24) in derselben Ebene liegen.

7. Ankerschiene nach einem der Ansprüche 1 bis 5,
**dadurch gekennzeichnet, dass** die Ankerschiene (1) einen ebenen Boden (7) umfasst, an dem der zumindest eine Anker (2) angeordnet ist, dass die Seitenwände (3) senkrecht in Bezug auf den Boden (7) angeordnet sind, dass die Seitenwände (3) mit dem Boden (7) Außenkanten bilden, dass die Seitenwände (3) parallel zueinander verlaufen, und dass die freien (4, 24) Schenkel auf gleicher Höhe an dem dem Boden (7) abgewandten Bereich der Seitenwände (3) senkrecht zu den Seitenwänden (3) angeordnet sind.

8. Ankerschiene nach einem der Ansprüche 1 bis 7,
**dadurch gekennzeichnet, dass** sich die Verzahnung (6, 46) der Außenseiten der Schenkel (4, 24, 34) von dem Schlitz (5) der Ankerschiene (1) bis etwa zu den Ebenen erstreckt, in denen auch die Innenwände der Seitenwände (3) liegen.

9. Ankerschiene nach einem der Ansprüche 1 bis 7,
**dadurch gekennzeichnet, dass** sich die Verzahnung (56, 66) der Schenkel (4, 24, 34) über die gesamte dem Anker (2) abgewandte Fläche der Schenkel (4, 24, 34) der Ankerschiene (1) erstreckt.

10. Ankerschiene nach einem der Ansprüche 1 bis 9,
**dadurch gekennzeichnet, dass** die Ankerschiene (1) aus kaltgewalztem Stahl besteht.

11. Befestigungssystem mit einer Ankerschiene nach einem der Ansprüche 1 bis 10 zur Befestigung eines Gegenstands (10, 50) an der im Beton zu befestigenden Ankerschiene (1),
wobei ein Rastungselement (12, 32, 41, 43) vorgesehen ist, das eine Verzahnung (13, 25, 33, 44) aufweist, dass das Rastungselement (12, 32, 41, 43) an den freien Schenkeln (4, 24, 34) der Ankerschiene (1) angeordnet ist, dass die Verzahnung (13, 25, 33, 44) des Rastungselements (12, 32, 41, 43) in Richtung der freien Schenkel (4, 24, 34) der Ankerschiene (1) zeigt, dass die Verzahnung (13, 25, 33, 44) des Rastungselements (12, 32, 41, 43) in befestigtem Zustand des Gegenstands (10, 50) in die Verzahnung (6, 46, 56, 66) der Schenkel (4, 24, 34) eingreift.

12. Befestigungssystem nach Anspruch 11,
**dadurch gekennzeichnet, dass** das Befestigungssystem eine Kopfschraube (8) umfasst, dass im befestigten Zustand ein Kopf (21) der Kopfschraube (8) in den zwischen den freien Schenkeln (4, 24, 34) in Längsrichtung (200) der Ankerschiene (1) ausgebildeten Schlitz (5) eingehängt ist und ein Gewindeschaft (11) der Kopfschraube (8) in Richtung weg vom Anker der Ankerschiene (1) aus der Ankerschiene (1) herausragt, dass das Rastungselement (12, 32, 41) eine Durchgangsöffnung (15) aufweist, und dass der Gewindeschaft (11) der Kopfschraube (8) zur Sicherung der Kopfschraube (8) innerhalb der Ankerschiene (1) durch die Durchgangsöffnung (15) des Rastungselements (12, 32, 41) gesteckt ist.

13. Befestigungssystem nach Anspruch 11 oder 12,
**dadurch gekennzeichnet, dass** das Rastungselement (12, 32, 43) getrennt vom zu befestigenden Gegenstand (10) ausgebildet ist.

14. Befestigungssystem nach Anspruch 13,
**dadurch gekennzeichnet, dass** die Seitenwände (3) der Ankerschiene (1) die freien Schenkel (4, 24, 34) der Ankerschiene (1) um eine Randdicke (d) des Rastungselements (12, 32) überragen und dass eine Breite (x) des Rastungselements (12, 32) einem Abstand (y) der Innenseiten der Seitenwände (3) entspricht, so dass die Stirnseiten (14) der Seitenwände (3) und das Rastungselement (12, 32) im befestigten Zustand des Rastungselements (12, 32) eine bündige ebene Fläche formen.

15. Befestigungssystem nach einem der Ansprüche 11 bis 14,
**dadurch gekennzeichnet, dass** das Rastungselement (12, 32, 41) und die Verzahnung (13, 33, 44) des Rastungselements (12, 32, 41) an die Winkelstellung der freien Schenkel (4) und an die Verzahnung (6, 46, 56, 66) der freien Schenkel (4, 24, 34) so angepasst sind, dass im befestigten Zustand des zu befestigenden Gegenstands (10, 50) die Verzahnung (13, 33, 44) des Rastungselements (12, 32, 41) mit mindestens 80% ihrer Oberfläche formschlüssig auf den dem Anker (2) abgewandten Seiten der Schenkel (4, 24, 34) der Ankerschiene (1) aufliegt.

## Claims

1. Anchor rail for anchoring in concrete, having a substantially C-shaped cross-section, wherein the anchor rail (1) comprises at least one anchor (2), two side walls (3) and two opposite free legs (4, 24, 34), wherein a slot (5) is formed in the longitudinal direction (200) of the anchor rail (1) between the free legs (4, 24, 34), wherein the free legs (4, 24, 34) have an at least partial toothing (6, 46, 56, 66) on the side averted from the anchor (2) and thus on the front outside of the anchor rail (1) with respect to the longitudinal direction (100),
**characterised in that** a region of the two side walls (3) which is averted from the at least one anchor (2) is bounded at the same level by end faces (14) of the side walls (3), and **in that** the end faces (14) of the side walls (3) top the free legs (4, 24, 34).

2. Anchor ail according to claim 1,
**characterised in that** the legs (4, 24, 34) have, on the side averted from the anchor (2) and thus on the front outside of the anchor rail (1) with respect to the longitudinal direction (200), a continuous toothing (6, 46, 56, 66).

3. Anchor ail according to claim 1 or 2,
**characterised in that** the toothing (6, 46, 56, 66) of the legs (4, 24, 34) is oriented transversely to the longitudinal direction (200) of the anchor rail (1).

4. Anchor ail according to any of claims 1 to 3,
**characterised in that** the toothing (6, 56) of the legs (4, 24, 34) is deeper **in that** region of the legs (4, 24, 34) which is adjacent to the slot (5) than **in that** region of the legs (4, 24, 34) which is farther away from the slot (5).

5. Anchor ail according to any of claims 1 to 4,
**characterised in that** the wall thickness of the legs (24) increases from the side walls (3) of the anchor rail (1) towards the slot (5) of the anchor rail (1).

6. Anchor ail according to any of claims 1 to 5,
**characterised in that** the legs (4, 24) of the anchor rail (1) and at least that part of the side walls (3) of the anchor rail (1) which adjoins the legs (4, 24) are oriented orthogonally to each other, and **in that** those surfaces of the legs (4, 24) which are averted from the anchor (2) lie in the same plane.

7. Anchor ail according to any of claims 1 to 5,
**characterised in that** the anchor rail (1) comprises a flat base (7), at which the at least one anchor (2) is located, **in that** the side walls (3) are arranged to be perpendicular to the base (7), **in that** the side walls (3) form outer edges with the base (7), **in that** the side walls (3) extend parallel to each other, and **in that** the free legs (4, 24) are located at the same level perpendicular to the side walls (3) **in that** region of the side walls (3) which is averted from the base (7).

8. Anchor ail according to any of claims 1 to 7,
**characterised in that** the toothing (6, 46) of the outsides of the legs (4, 24, 34) extends from the slot (5) of the anchor rail (1) approximately to those planes in which the inner walls of the side walls (3) lie as well.

9. Anchor ail according to any of claims 1 to 7,
**characterised in that** the toothing (56, 66) of the legs (4, 24, 34) extends along the whole surface of the legs (4, 24, 34) of the anchor rail (1) which is averted from the anchor (2).

10. Anchor ail according to any of claims 1 to 9,
**characterised in that** the anchor rail (1) consists of cold-rolled steel.

11. Fastening system with an anchor rail according to any of claims 1 to 10 for fastening an object (10, 50) to the anchor rail (1) to be secured in the concrete, wherein a latching element (12, 32, 41, 43) having a toothing (13, 25, 33, 44) is provided, wherein the latching element (12, 32, 41, 43) is located at the free legs (4, 24, 34) of the anchor rail (1), wherein the toothing (13, 25, 33, 44) of the latching element (12, 32, 41, 43) points towards the free legs (4, 24, 34) of the anchor rail (1), and wherein the toothing (13, 25, 33, 44) of the latching element (12, 32, 41, 43) engages in the fastened state of the object (10, 50) with the toothing (6, 46, 56, 66) of the legs (4, 24, 34).

12. Fastening system according to claim 11,
**characterised in that** the fastening system comprises a cap screw (8), **in that** in the fastened state a head (21) of the cap screw (8) is hooked into the slot (5) between the free legs (4, 24, 34) in the longitudinal direction (200) of the anchor rail (1) and a threaded shank (11) of the cap screw (8) projects from the anchor rail (1) in the direction away from the anchor of the anchor rail (1), **in that** the latching element (12, 32, 41) has a through-opening (15), and **in that** the threaded shank (11) of the cap screw (8) is inserted through the through-opening (15) of the latching element (12, 32, 41) to secure the cap screw (8) within the anchor rail (1).

13. Fastening system according to claim 11 or 12,
**characterised in that** the latching element (12, 32, 43) is designed separately from the object (10) to be fastened.

14. Fastening system according to claim 13,
**characterised in that** the side walls (3) of the anchor rail (1) top the free legs (4, 24, 34) of the anchor rail (1) by an edge thickness (d) of the latching element (12, 32), and **in that** a width (x) of the latching element (12, 32) corresponds to a spacing (y) of the insides of the side walls (3), so that the end faces (14) of the side walls (3) and the latching element (12, 32) form a flush flat surface in the fastened state of the latching element (12, 32).

15. Fastening system according to any of claims 11 to 14,
**characterised in that** the latching element (12, 32, 41) and the toothing (13, 33, 44) of the latching element (12, 32, 41) are adapted in such a way to the angular position of the free legs (4) and to the toothing (6, 46, 56, 66) of the free legs (4, 24, 34) that in the fastened state of the object (10, 50) to be fastened the toothing (13, 33, 44) of the latching element (12, 32, 41) lies with at least 80% of its surface positively on those sides of the legs (4, 24, 34) of the anchor rail (1) which are averted from the anchor (2).

## Revendications

1. Rail d'ancrage pour l'ancrage dans le béton, avec une section transversale sensiblement en forme de C, dans lequel le rail d'ancrage (1) comprend au moins un ancrage (2), deux parois latérales (3) et deux branches libres opposées (4, 24, 34), dans lequel une fente (5) est formée dans la direction longitudinale (200) du rail d'ancrage (1) entre les branches libres (4, 24, 34), dans lequel les branches libres (4, 24, 34) ont sur leur côté opposé à l'ancrage (2), et donc sur le côté extérieur avant du rail d'ancrage (1) une denture au moins partielle (6, 46, 56, 66) par rapport au sens longitudinal (200),
**caractérisé en ce qu'**une zone des deux parois latérales (3) opposée au au moins un ancrage (7) est limitée à la même hauteur par des côtés frontaux (14) des parois latérales (3), et **en ce que** les côtés frontaux (14) des parois latérales (3) dépassent des branches libres (4, 24, 34).

2. Rail d'ancrage selon la revendication 1,
**caractérisé en ce que** les branches libres (4, 24, 34) ont sur leur côté opposé à l'ancrage (2), et donc sur le côté extérieur avant du rail d'ancrage (1) une denture continue (6, 46, 56, 66) par rapport au sens longitudinal (200).

3. Rail d'ancrage selon la revendication 1 ou 2,
**caractérisé en ce que** la denture (6, 46, 56, 66) des branches (4, 24, 34) est orientée transversalement par rapport à la direction longitudinale (200) du rail d'ancrage (1).

4. Rail d'ancrage selon l'une des revendications 1 à 3,
**caractérisé en ce que** la denture (6, 56) des branches (4, 24, 34) est plus profonde dans la zone des branches (4, 24, 34) voisine de la fente (5) que dans la zone des branches (4, 24, 34) plus éloignée de la fente (5).

5. Rail d'ancrage selon l'une des revendications 1 à 4,
**caractérisé en ce que** l'épaisseur de paroi des branches (24) augmente des parois latérales (3) du rail d'ancrage (1) vers la fente (5) du rail d'ancrage (1).

6. Rail d'ancrage selon l'une des revendications 1 à 5,
**caractérisé en ce que** les branches (4, 24) du rail d'ancrage (1) et au moins la partie des parois latérales (3) du rail d'ancrage (1) adjacente aux branches (4, 24) sont orientées orthogonalement les unes par rapport aux autres, et **en ce que** les surfaces des branches (4, 24) opposées à l'ancrage (2) se trouvent dans le même plan.

7. Rail d'ancrage selon l'une des revendications 1 à 5,
**caractérisé en ce que** le rail d'ancrage (1) comprend un fond plan (7) sur lequel est disposé le au moins un ancrage (2), **en ce que** les parois latérales (3) sont disposées perpendiculairement au fond (7), **en ce que** les parois latérales (3) forment avec le fond (7) des arêtes extérieures, **en ce que** les parois latérales (3) sont parallèles l'une à l'autre, et **en ce que** les branches libres (4, 24) sont disposées à la même hauteur sur la zone des parois latérales (3) opposée au fond (7) perpendiculairement aux parois latérales (3).

8. Rail d'ancrage selon l'une des revendications 1 à 7,
**caractérisé en ce que** la denture (6, 46) des côtés extérieurs des branches (4, 24, 34) s'étend de la fente (5) du rail d'ancrage (1) environ jusqu'aux plans dans lesquels se trouvent aussi les parois intérieures des parois latérales (3).

9. Rail d'ancrage selon l'une des revendications 1 à 7,
**caractérisé en ce que** la denture (56, 66) des branches (4, 24, 34) s'étend sur toute la surface des branches (4, 24, 34) du rail d'ancrage (1) opposée à l'ancrage (2).

10. Rail d'ancrage selon l'une des revendications 1 à 9,
**caractérisé en ce que** le rail d'ancrage (1) se compose d'acier laminé à froid.

11. Système de fixation avec un rail d'ancrage selon l'une des revendications 1 à 10 pour la fixation d'un objet (10, 50) au rail d'ancrage (1) à fixer dans le béton, dans lequel il est prévu un élément à cran (12, 32, 41, 43) qui présente une denture (13, 25, 33, 44), en ce que l'élément à cran (12, 32, 41, 43) est disposé sur les branches libres (4, 24, 34) du rail d'ancrage (1), en ce que la denture (13, 25, 33, 44) de l'élément à cran (12, 32, 41, 43) est dirigée dans la direction des branches libres (4, 24, 34) du rail d'ancrage (1), en ce que la denture (13, 25, 33, 44) de l'élément à cran (12, 32, 41, 43), dans l'état fixé de l'objet (10, 50), vient en prise dans la denture (6, 46, 56, 66) des branches (4, 24, 34).

12. Système de fixation selon la revendication 11,
**caractérisé en ce que** le système de fixation comprend une vis à tête (8), **en ce que** dans l'état fixé, une tête (21) de la vis à tête (8) est accrochée dans la fente (5) formée entre les branches libres (4, 24, 34) dans la direction longitudinale (200) du rail d'ancrage (1), et une tige filetée (11) de la vis à tête (8) dépasse du rail d'ancrage (1) à l'opposé de l'ancrage du rail d'ancrage (1), **en ce que** l'élément à cran (12, 32, 41) présente une ouverture de passage (15), et **en ce que** la tige filetée (11) de la vis à tête (8) est introduite dans l'ouverture de passage (15) de l'élément à cran (12, 32, 41) pour bloquer la vis à tête (8) à l'intérieur du rail d'ancrage (1).

13. Système de fixation selon la revendication 11 ou 12,
**caractérisé en ce que** l'élément à cran (12, 32, 43) est formé séparément de l'objet à fixer (10).

14. Système de fixation selon la revendication 13,
**caractérisé en ce que** les parois latérales (3) du rail d'ancrage (1) dépassent des branches libres (4, 24, 34) du rail d'ancrage (1) d'une épaisseur de bord (d) de l'élément à cran (12, 32), et **en ce qu'**une largeur (x) de l'élément à cran (12, 32) correspond à un écartement (y) des côtés intérieurs des parois latérales (3), de sorte que les côtés frontaux (14) des parois latérales (3) et l'élément à cran (12, 32) forment dans l'état fixé de l'élément à cran (12, 32) une surface plane de même niveau.

15. Système de fixation selon l'une des revendications 11 à 14,
**caractérisé en ce que** l'élément à cran (12, 32, 41) et la denture (13, 33, 44) de l'élément à cran (12, 32, 41) sont adaptés à la position angulaire des branches libres (4) et à la denture (6, 46, 56, 66) des branches libres (4, 24, 34) de telle sorte que dans l'état fixé de l'objet à fixer (10, 50), la denture (13, 33, 44) de l'élément à cran (12, 32, 41) soit posée avec au moins 80 % de sa surface par complémentarité de forme sur les côtés des branches (4, 24, 34) du rail d'ancrage (1) opposés à l'ancrage (2).
